(19) Europäisches Patentamt
European Patent Office
Office européen des brevets

(11) Veröffentlichungsnummer: **0 153 480**
**A2**

(12) **EUROPÄISCHE PATENTANMELDUNG**

(21) Anmeldenummer: 84115663.1

(22) Anmeldetag: 18.12.84

(51) Int. Cl.⁴: C 09 B 62/022
D 06 P 3/10, D 06 P 3/66
C 09 B 11/28

(30) Priorität: 28.12.83 DE 3347246

(43) Veröffentlichungstag der Anmeldung: 04.09.85 Patentblatt 85/36

(84) Benannte Vertragsstaaten: CH DE FR GB LI

(71) Anmelder: BAYER AG
Konzernverwaltung RP Patentabteilung
D-5090 Leverkusen 1 Bayerwerk(DE)

(72) Erfinder: Raue, Roderich, Dr.
Berta-von-Suttner-Strasse 48
D-5090 Leverkusen 1(DE)

(72) Erfinder: Wunderlich, Klaus, Dr.
Carl-Rumpff-Strasse 21
D-5090 Leverkusen 1(DE)

(54) **Reaktivfarbstoffe der Diarylaminoxanthen-Reihe, ihre Herstellung und Verwendung.**

(57) Durch die vorliegende Anmeldung werden neue Reaktivfarbstoffe der Diarylaminoxanthen-Reihe der Formel

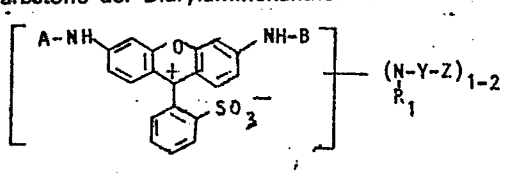

(I)

sowie Ausgangsprodukte zu deren Herstellung bereitgestellt, worin

- A = ein- oder mehrkerniger aromatischer Ring,
- B = sulfogruppenfreier ein- oder mehrkerniger aromatischer Ring.
- $R_1$ = H, Alkyl,
- Y = direkte Bindung oder Brückenglied,
- Z = ein heterocyclischer faserreaktiver Rest und wobei die Ringe A und B noch weitere in Farbstoffen übliche Substituenten tragen können.

Der Rest $-N(R_1)-Y-Z$ ist vorzugsweise an ein Ring-C-Atom von A und/oder B gebunden.

Die neuen Farbstoffe eignen sich in hervorragendem Maße zum Färben oder Bedrucken von hydroxylgruppen- und/oder stickstoffhaltigen Textilmaterialien.

EP 0 153 480 A2

Croydon Printing Company Ltd.

0153480

BAYER AKTIENGESELLSCHAFT 5090 Leverkusen, Bayerwerk

Konzernverwaltung RP
Patentabteilung

Er/Kü-c

# Reaktivfarbstoffe der Diarylaminoxanthen-Reihe, ihre Herstellung und Verwendung

Die vorliegende Erfindung betrifft neue Reaktivfarbstoffe der Diarylaminoxanthen-Reihe der Formel

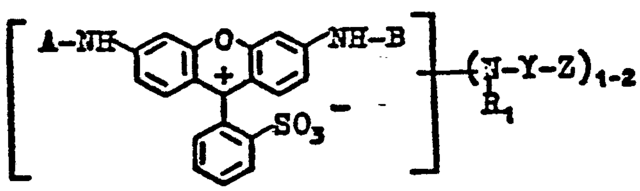

I

worin

A = ein- oder mehrkerniger aromatischer Ring,

B = sulfogruppenfreier ein- oder mehrkerniger aromatischer Ring,

$R_1$ = H, Alkyl,

Y = direkte Bindung oder Brückenglied,

Z = ein heterocyclischer faserreaktiver Rest und wobei A und B noch weitere in Farbstoffen übliche Substituenten tragen können, sowie deren Herstellung und deren Verwendung.

Die Ringe A und B können 1 - 4 Substituenten aufweisen, vorzugsweise Halogen, Alkyl, Alkoxy, Aryloxy, Amino, Alkylamino, Arylamino, Acylamino, Nitro, bei Ring A auch $SO_3H$.

Der Rest $\overset{R_1}{N}$-Y-Z ist vorzugsweise an ein Ring-C-Atom von A und/oder B gebunden.

Geeignete Brückenglieder Y sind beispielsweise
$-\text{Arylen}-\underset{R_2}{N}-$, $-\text{Alkylen}-\underset{R_2}{N}-$, $-\text{Alkarylen}-\underset{R_2}{N}-$, $-\text{Cycloalkylen}-\underset{R_2}{N}-$,
wobei $R_2$ = H, Alkyl, insbesondere $C_1$-$C_4$-Alkyl,

wobei

Arylen = gegebenenfalls substituiertes Phenylen, insbesondere Phenylen und durch Alkyl, Alkoxy, Sulfo, Carboxy oder Halogen substituiertes Phenylen, wie 1,3-, 1,4-Phenylen, 2-Methyl-1,3-phenylen, 4-Methyl-1,3-phenylen, 4-Methoxy-1,3-phenylen, 6-Methoxy-1,3-phenylen sowie die durch 1 - 2 Sulfonsäuregruppen substituierten genannten Arylenreste, wie zum Beispiel 4-Sulfo-1,3-phenylen, 3-Sulfo-1,4-phenylen, 2-Sulfo-1,4-phenylen.

Alkylen = $C_1$-$C_6$-Alkylen, gegebenenfalls durch O, S oder N unterbrochen, gegebenenfalls substituiert, beispielsweise durch OH, $OSO_3H$, $SO_3H$, beispielsweise Methylen, Ethylen, 1,2- und 1,3-Propylen, 1,2-, 1,3-, 1,4- und 2,3-Butylen, 2-Methyl-1,3-propylen, 2,2-Dimethylpropylen, 1,5-Pentylen, 1,6-Hexylen, 1,3-Cyclohexylen, 1,4-Cyclohexylen, 4-Methyl-1,3-cyclohexylen, 2-Hydroxy-1,3-propylen, $-CH_2CH_2-O-CH_2CH_2-$, $-CH_2CH_2-S-CH_2CH_2-$,

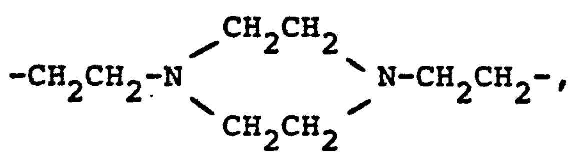, 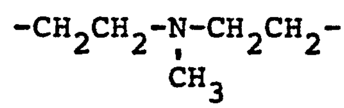

Alkarylen = -Alkylen-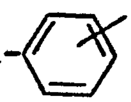, wie $-CH_2-$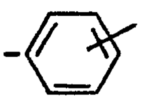,

$-CH_2CH_2-$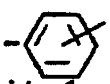, sowie die entsprechenden Reste mit 1 - 2 Sulfogruppen im Arylenrest.

Als faserreaktive Reste werden solche verstanden, die unter Färbebedingungen mit hydroxylgruppen- oder amidgruppenhaltigen Materialien unter Ausbildung einer kovalenten Bindung reagieren.

Heterocyclische faseraktive Reste sind beispielsweise solche, die mindestens einen abspaltbaren Substituenten an einen heterocyclischen Rest gebunden enthalten, insbesondere solche, die mindestens einen reaktiven Substituenten an einen 5- oder 6-gliedrigen heterocyclischen Ring gebunden enthalten, wie an einen Monazin-,

Diazin-, Triazin-, z.B. Pyridin-, Pyrimidin-, Pyridazin-, Pyrazin-, Thiazin-, Oxazin- oder asymmetrischen oder symmetrischen Triazinring, oder an ein derartiges Ringsystem, welches einen oder mehrere ankondensierte aromatische Ringe aufweist, wie ein Chinolin-, Phthalazin-, Cinnolin-, Chinazolin-, Chinoxalin-, Acridin-, Phenazin- und Phenanthridin-Ringsystem; die 5- oder 6-gliedrigen heterocyclischen Ringe, welche mindestens einen reaktiven Substituenten aufweisen, sind demnach bevorzugt solche, die ein oder mehrere Stickstoffatome enthalten und 5- oder bevorzugt 6-gliedrige carbocyclische Ringe ankondensiert enthalten können.

Unter den reaktiven Substituenten am Heterocyclus sind beispielsweise zu erwähnen:

Halogen (Cl, Br oder F), Ammonium, einschließlich Hydrazinium, Sulfonium, Sulfonyl, Azido-($N_3$), Rhodanido, Thio, Thiolether, Oxyether, Sulfinsäure und Sulfonsäure. Im einzelnen sind beispielsweise zu nennen:

Mono- oder Dihalogen-symmetrische-triazinylreste, z.B. 2,4-Dichlortriazinyl-6-, 2-Amino-4-chlortriazinyl-6-, 2-Alkylamino-4-chlortriazinyl-6-, wie 2-Methylamino-4-chlortriazinyl-6-, 2-Ethylamino- oder 2-Propylamino-4-chlortriazinyl-6-, 2-ß-Oxethylamino-4-chlortriazinyl-6-, 2-Di-ß-oxethylamino-4-chlortriazinyl-6- und die entsprechenden Schwefelsäurehalbester, 2-Diethylamino-4-chlortriazinyl-6-, 2-Morpholino- oder 2-Piperidino-4-

chlortriazinyl-6-, 2-Cyclohexylamino-4-chlortriazinyl-6-, 2-Arylamino- und substituiertes Arylamino-4-chlortriazinyl-6-, wie 2-Phenylamino-4-chlortriazinyl-6-, 2-(o-, m- oder p-Carboxy- oder Sulfophenyl)-amino-4-chlortriazinyl-6-, 2-(2',4'-,2',5'- oder 3',4'-Disulfophenyl)-amino-4-chlor-triazinyl-6, 2-Alkoxy-4-chlortriazinyl-6-, wie 2-Methoxy- oder Ethoxy-4-chlortriazinyl-6-, 2-(Phenyl-sulfonylmethoxy)-4-chlortriazinyl-6-, 2-Aryloxy und substituiertes Aryloxy-4-chlortriazinyl-6-, wie 2-Phenoxy-4-chlortriazinyl-6-, 2-(p-Sulfophenyl)-oxy-4-chlortriazinyl-6-, 2-(o-, m- oder p-Methyl- oder Methoxyphenyl)-oxy-4-chlor-triazinyl-6-, 2-Alkylmercapto- oder 2-Arylmercapto- oder 2-(substituiertes Aryl)-mercapto-4-chlortriazinyl-6-, wie 2-ß-Hydroxyethylmercapto-4-chlor-triazinyl-6-, 2-Phenylmercapto-4-chlortriazinyl-6-, 3-(4'-Methylphenyl)-mercapto-4-chlortriazinyl-6-, 2-(2',4'-Dinitro)-phenyl-mercapto-4-chlortriazinyl-6-, 2-Methyl-4-chlor-triazinyl-6-, 2-Phenyl-4-chlor-triazinyl-6, 2,4-Difluortriazinyl-6, Monofluortriazinylreste, die durch Amino-, Alkylamino-, Aralkylamino, Arylaminogruppen substituiert sind, wobei Alkyl, insbesondere gegebenenfalls substituiertes $C_1$-$C_4$-Alkyl, Aralkyl, insbesondere gegebenenfalls substituiertes Phenyl-$C_1$-$C_4$-Alkyl und Aryl, insbesondere gegebenenfalls durch Sulfo-, Alkyl-, insbesondere $C_1$-$C_4$-Alkyl, Alkoxy-, insbesondere $C_1$-$C_4$-Alkoxy-, Carbonsäure-, Acylaminogruppen und Halogenatome wie Fluor, Chlor oder Brom substituiertes Phenyl oder Naphthyl bedeutet, beispielsweise 2-Amino-4-fluortriazinyl-6, 2-Methylamino-4-fluor-triazinyl-6, 2-Ethylamino-4-fluor-triazinyl-6, 2-iso-Propylamino-4-fluor-triazinyl-6, 2-Dimethylamino-4-fluor-triazinyl-6, 2-Diethylamino-4-fluor-triazinyl-6, 2-ß-Methoxy-ethylamino-4-fluor-triazinyl-6, 2-ß-Hydroxyethylamino-4-fluor-triazinyl-6, 2-Di-(ß-hydroxyethylamino)-4-fluor-triazinyl-6, 2-ß-Sulfoethylamino-4-fluortriazinyl-6,
2-ß-Sulfoethyl-methylamino-4-fluor-triazinyl-6,
2-Carboxymethylamino-4-fluor-triazinyl-6,
2-ß-Cyanethylamino-4-fluor-triazinyl-6,
2-Benzylamino-4-fluor-triazinyl-6,
2-ß-Phenylethylamino-4-fluor-triazinyl-6,
2-Benzyl-methylamino-4-fluor-triazinyl-6,
2-(x-Sulfo-benzyl)-amino-4-fluor-triazinyl-6,
2-Cyclohexylamino-4-fluor-triazinyl-6,
2-(o-, m-, p-Methylphenyl)-amino-4-fluor-triazinyl-6,
2-(o-, m-, p-Sulfophenyl)-amino-4-fluor-triazinyl-6,
2-(2',5'-Disulfophenyl)-amino-4-fluor-triazinyl-6,
2-(o-, m-, p-Chlorphenyl)-amino-4-fluor-triazinyl-6,
2-(o-, m-, p-Methoxyphenyl)-4-fluor-triazinyl-6,
2-(2'-Methyl-4'-sulfophenyl)-amino-4-fluor-triazinyl-6,
2-(2'-Methyl-5'-sulfophenyl)-amino-4-fluor-triazinyl-6,
2-(2'-Chlor-4'-sulfophenyl)-amino-4-fluor-triazinyl-6,
2-(2'-Chlor-5'-sulfophenyl)-amino-4-fluor-triazinyl-6,
2-(2'-Methoxy-4'-sulfophenyl)-amino-4-fluor-triazinyl-6,
2-(o-, m-, p-Carboxyphenyl)-amino-4-fluor-triazinyl-6,
2-(2',4'-Disulfophenyl)-amino-4-fluor-triazinyl-6,
2-(3',5'-Disulfophenyl)-amino-4-fluor-triazinyl-6,
2-(2'-Carboxy-4-sulfophenyl)-amino-4-fluor-triazinyl-6,
2-(6'-Sulfonaphthyl-(2'))-amino-4-fluor-triazinyl-6,
2-(4',8'-Disulfonaphthyl-(2'))-amino-4-fluor-triazinyl-6,
2-(6',8'-Disulfonaphthyl-(2'))-amino-4-fluor-triazinyl-6,

2-(N-Methylphenyl)-amino-4-fluor-triazinyl-6,
2-(N-ethylphenyl)-amino-4-fluor-triazinyl-6,
2-(N-ß-Hydroxyethylphenyl)-amino-4-fluor-triazinyl-6,
2-(N-iso-Propylphenyl)-amino-4-fluor-triazinyl-6,
2-Morpholino-4-fluor-triazinyl-6,
2-Piperidino-4-fluor-triazinyl-6,
2-(4',6',8'-Trisulfonaphthyl-(2'))-4-fluor-triazinyl-6,
2-(3',6',8'-Trisulfonaphthyl-(2'))-4-fluor-triazinyl-6,
2-(3',6'-Disulfonaphthyl-(1'))-4-fluor-triazinyl-6,
2-Chlor- oder 2-Fluor-4-(4'-ß-sulfatoethylsulfonyl-phenylamino)-6-triazinyl; 2-Chlor- oder 2-Fluor-4-(3'-ß-sulfatoethylsulfonyl-phenylamino)-6-triazinyl; 2-Chlor- und 2-Fluor-4-(ß-(ß'-sulfatoethylsulfonyl)-ethylamino)-6-triazinyl; 2-Fluor-4-bis-(ß-(ß'-chlorethylsulfonyl)-ethyl)-amino-6-triazinyl.

Die Halogentriazinylreste können auch mit einem zweiten Halogentriazinylrest verknüpft sein. Beispiele für derartige Reste sind die folgenden:

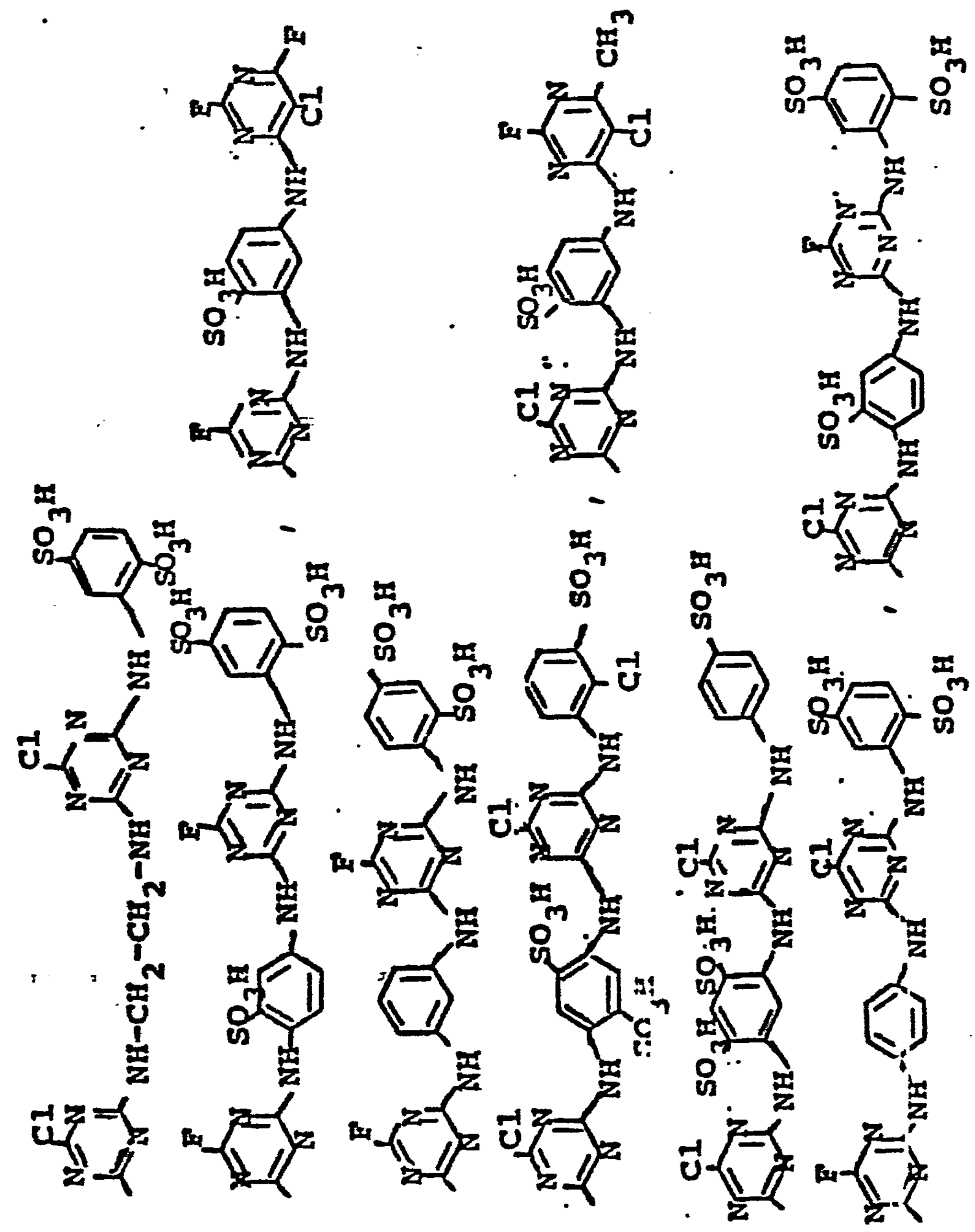

Weiterhin können die reaktiven Halogenatome in den oben genannten 2-Halogen-4-substituierten-triazinyl-Resten unter Bildung quartärer Salze noch gegen tertiäre Basen wie Trimethylamin, Triethylamin, Dimethyl-ß-hydroxyethylamin, Triethanolamin, N-N-Dimethylhydrazin, Pyridin, α-, γ-Picolin, Nicotinsäure oder Isonicotinsäure ausgetauscht werden.

Mono-, Di- oder Trihalogenpyrimidinylreste, wie 2,4-Dichlorpyrimidinyl-6-, 2,4,5-Trichlorpyrimidinyl-6-, 2,4-Dichlor-5-nitro- oder -5-methyl- oder -5-carboxymethyl- oder -5-carboxy- oder -5-cyano- oder -5-vinyl- oder -5-sulfo- oder -5-mono- -di- oder -trichlormethyl- oder -5-carboalkoxy-pyrimidinyl-6-, 2,6-Dichlorpyrimidin-4-carbonyl-, 2,4-Dichlorpyrimidin-5-carbonyl-, 2-Chlor-4-methylpyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, 2-Chlorchinoxalin-3-carbonyl-, 2- oder 3-Monochlorchinoxalin-6-carbonyl-, 2- oder 3-Monochlorchinoxalin-6-sulfonyl-, 2,3-Dichlorchinoxalin-6-carbonyl-, 2,3-Dichlorchinoxalin-6-sulfonyl-, 1,4-Dichlorphthalazin-6-sulfonyl- oder -6-carbonyl-, 2,4-Dichlorchinazolin-7- oder -6-sulfonyl- oder -carbonyl-, 2- oder 3- oder 4-(4',5'-Dichlorpyridazon-6'-yl-1')-phenylsulfonyl- oder carbonyl-, ß-(4',5'-Dichlorpyridazon-6'-yl-1')-ethylcarbonyl-, N-Methyl-N-(2,4-dichlortriazinyl-6-)-carbamyl-, N-Methyl-N-(2-methylamino-4-chlortriazinyl-6)-carbamyl-, N-Methyl-N-

2-dimethylamino-4-chlortriazinyl-6)-carbamyl-, N-Methyl- oder N-Ethyl-N-(2,4-dichlortriazinyl-6)-aminoacetyl-, N-Methyl-N-(2,3-dichlorchinoxalin-6-sulfonyl)-aminoacetyl-, N-Methyl-N-(2,3-dichlorchinoxalin-6-carbonyl)-aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl, 2-Fluor-5,6-dichlor-4-pyrimidinyl-, 2,6-Difluor-5-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder -5-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-phenyl-4-pyrimidinyl-, 2-Fluor-6-cyan-4-pyrimidinyl-, 2-Fluor-4-dichlormethyl-5-chlorpyrimidin-6-yl, 2-Fluor-5-chlor-

pyrimidin-4-yl; 2-Methyl-4-fluor-5-methylsulfonylpyrimidinyl-6; 2,6-Difluor-5-methyl-sulfonyl-4-pyrimidinyl-, 2,6-Dichlor-5-methylsulfonyl-4-pyrimidinyl, 2-Fluor-5-sulfonamido-4-pyrimidinyl-, 2-Fluor-5-chlor-6- carbomethoxy-4-pyrimidinyl-, 2,6-Difluor-5-trifluormethyl-4-pyrimidinyl; sulfonylgruppenhaltige Triazinreste, wie 2,4-Bis-(phenylsulfonyl)-triazinyl-6-, 2-(3'-Carboxyphenyl)- sulfonyl-4-chlortriazinyl-6-, 2-(3'-Sulfophenyl)-sulfonyl-4-chlortriazinyl-6-, 2,4-Bis-(3'-carboxyphenylsulfonyl-)- triazinyl-6; sulfonylgruppenhaltige Pyrimidinringe, wie 2-Carboxymethylsulfonyl-pyrimidinyl-4-, 2-Methylsulfonyl-6-methyl-pyrimidinyl-4-, 2-Methylsulfonyl-6-ethylpyrimidinyl-4-, 2-Phenylsulfonyl-5-chlor-6-methyl-pyrimidinyl-4-, 2,6-Bis-methylsulfonyl-pyrimidinyl-4-, 2,6-Bismethylsulfonyl-5-chlor-pyrimidinyl-4-, 2,4-Bis-methylsulfonyl-pyrimidin-5-sulfonyl-, 2-Methylsulfonyl-pyrimidinyl-4, 2-Phenylsulfonyl-pyrimidinyl-4-, 2-Trichlormethylsulfonyl-6-methyl-pyrimidinyl-4-, 2-Methylsulfonyl-5-chlor-6-methyl-pyrimidinyl-4-, 2-Methylsulfonyl-5-brom-6-methyl-pyrimidinyl-4-, 2-Methylsulfonyl-5-chlor-6-ethyl-pyrimidinyl-4-, 2-Methylsulfonyl-5-chlor-6-chlormethyl-pyrimidinyl-4-, 2-Methylsulfonyl-4-chlor-6-methylpyrimidin-5-sulfonyl-, 2-Methylsulfonyl-5-nitro-6-methylpyrimidinyl-4-, 2,5,6-Tris-methylsulfonyl-pyrimidinyl-4-, 2-Methylsulfonyl-5,6-dimethyl-pyrimidinyl-4-, 2-Ethylsulfonyl-5-chlor-6-methyl-pyrimidinyl-4-, 2-Methylsulfonyl-6-chlor-pyrimidinyl-4-, 2,6-Bis-methylsulfonyl-5-chlor-pyrimidinyl-4-, 2-Methylsulfonyl-6-carboxypyrimidinyl-4-, 2-Methylsulfonyl-5-sulfo-pyrimidinyl-4-, 2-Methylsulfonyl-6-carbomethoxy-pyrimidinyl-4-, 2-Methylsulfonyl-5-carboxy-pyrimidinyl-4-, 2-Methylsulfonyl-5-cyan-6-methoxy-pyrimidinyl-4-, 2-Methylsulfonyl-5-chlor-pyrimidinyl-4-, 2-Sulfoethylsulfonyl-6-methyl-pyrimidinyl-4-, 2-Methylsulfonyl-5-brom-pyrimidinyl-4-, 2-Phenyl-sulfonyl-5-chlor-pyrimidinyl-4-, 2-Carboxymethylsulfonyl-5-chlor-6-methyl-pyrimidinyl-4-, 2-Methylsulfonyl-6-chlorpyrimidin-4- und -5-carbonyl-, 2,6-Bis-(methylsulfonyl)-pyrimidin-4- oder -5-carbonyl-, 2-Ethylsulfonyl-6-chlorpyrimidin-5-carbonyl-, 2,4-Bis-(methylsulfonyl) pyrimidin-5-sulfonyl-, 2-Methylsulfonyl-4-chlor-6-methylpyrimidin-5-sulfonyl- oder -carbonyl-; ammoniumgruppenhaltige Triazinringe, wie 2-Trimethylammonium-4-phenylamino- oder -4-(o-, m- oder p-sulfophenyl)-aminotriazinyl-6-, 2-(1,1-Dimethylhydrazinium)-4-phenylamino- oder -4-(o-, m- oder p-sulfophenyl)-aminotriazinyl-6-, 2-(2-Isopropyliden-1,1-dimethyl)-hydrazinium-4-phenylamino- oder -4-(o-, m- oder p-sulfophenyl)-aminotriazinyl-6-, 2-N-Aminopyrrolidinium- oder 2-N-Aminopiperidinium-4-phenylamino- oder -4-(o-, m- oder p-sulfophenyl)-aminotriazinyl-6-, ferner 4-Phenylamino- oder 4-(sulfophenylamino)-triazinyl-6-Reste, die in 2-Stellung über eine Stickstoffbindung das 1,4-Bisazabicyclo-[2,2,2]-octan oder das-Bis-aza-bicyclo-[0,3,3]-octan quartär gebunden enthalten, 2-Pyridinium-4-phenylamino- oder -4-(o-, m- oder p-sulfophenyl)-aminotriazinyl-6- sowie entsprechende 2-Oniumtriazinyl-6-Reste, die in 4-Stellung durch Alkylamino- , wie Methylamino-, Ethylamino- oder ß-Hydroxyethylamino-, oder Alkoxy-, wie Methoxy- oder Ethoxy-, oder Aroxy-, wie Phenoxy- oder Sulfophenoxy-Gruppen substituiert sind; 2-Chlorbenzthiazol-5- oder -6-carbonyl- oder -5- oder -6-sulfonyl-, 2-Arylsulfonyl- oder -Alkylsulfonylbenzthiazol-5- oder -6-carbonyl- oder -5- oder -6-sulfonyl-, wie 2-Methylsulfonyl-oder 2-Ethylsulfonylbenzthiazol-5- oder -6-sulfonyl- oder -carbonyl-, 2-Phenylsulfonylbenzthiazol-5- oder -6-sulfonyl- oder carbonyl- und die entsprechenden im ankondensierten Benzolring Sulfogruppen enthaltenden 2-Sulfonylbenzthiazol-5- oder -6-carbonyl- oder -sulfonyl-Derivate, 2-Chlorbenzoxazol-5- oder -6-carbonyl- oder -sulfonyl-, 2-Chlorbenzimidazol-5- oder -6-carbonyl- oder -sulfonyl-, 2-Chlor-1-methylbenzimidazol-5- oder -6-carbonyl- oder sulfonyl-, 2-Chlor-4-methylthiazol-(1,3)-5-carbonyl- oder -4- oder -5-sulfonyl-, N-Oxid des 4-Chlor- oder 4-Nitrochinolin-5-carbonyl.

Bevorzugte Verbindungen der Formel I sind solche der Formeln II, III, IV und IVa:

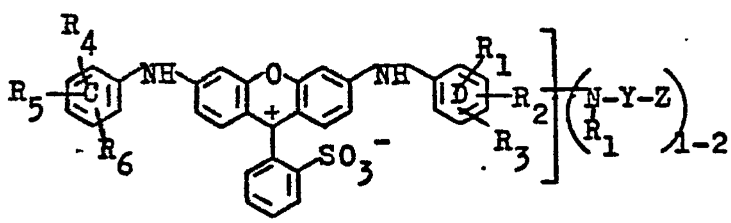

worin

II

$R_1$ - $R_6$ = unabhängig voneinander H oder Substituent, wobei zwei benachbarte Reste $R_1$, $R_2$ oder $R_3$ bzw. $R_4$, $R_5$ oder $R_6$ einen ankondensierten iso- oder heterocyclischen Ring bilden können,

und wobei der Kern D frei von Sulfonsäuregruppen ist,

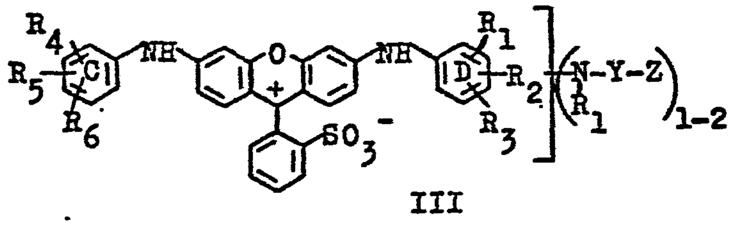

worin

III

$R_1 - R_3$ = H, Alkyl($C_1$-$C_4$), Alkoxy, Aryloxy, Halogen, COOH, Carboxyalkoxy, Carbonamid, Cyan, gegebenenfalls substituiertes Amino, Acylamino, Hydroxy, Alkylsulfonyl, Arylsulfonyl, Nitro,

$R_4 - R_6$ = H, Alkyl($C_1$-$C_4$), Alkoxy, Aryloxy, Halogen, COOH, Carboxyalkoxy, Carbonamid, Cyan, gegebenenfalls substituiertes Amino, Acylamino, Hydroxy, Alkylsulfonyl, Arylsulfonyl, Nitro, $SO_3H$,

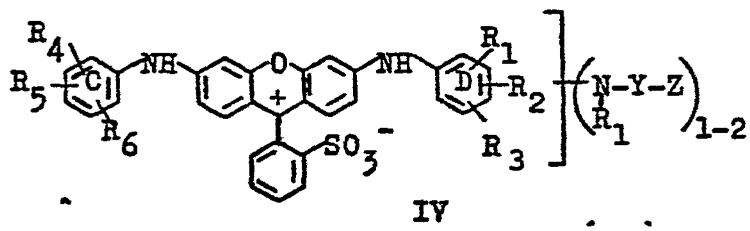

worin

IV

$R_1 - R_6$ = unabhängig voneinander H oder Substituent, wobei zwei benachbarte Reste $R_1$, $R_2$ oder $R_3$ bzw. $R_4$, $R_5$ oder $R_6$ einen ankondensierten iso- oder heterocyclischen Ring bilden können;

Y = direkte Bindung 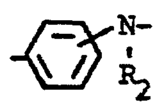 , $C_2$-$C_4$-Alkylen-N($R_2$)-,

Cycloalkylen-N($R_2$)-,

und wobei der Kern D frei von Sulfonsäuregruppen ist.

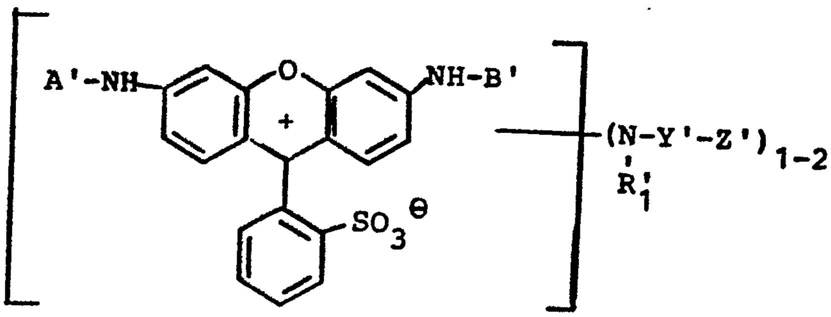

IVa

worin

A' = gegebenenfalls durch $SO_3H$, Alkoxy-($C_1$-$C_4$), $NO_2$, Alkyl-($C_1$-$C_4$), Phenoxy, Phenylamino substituierter Benzol- oder Naphthalinrest,

B' = gegebenenfalls durch Alkyl-($C_1$-$C_4$), Alkoxy-($C_1$-$C_4$), Halogen substituierter Benzolrest,

$R_1'$ = Wasserstoff

Y' = direkte Bindung oder die Gruppe $-CH_2-CH_2-NH-$

Z' = Reaktivrest der Reihe Fluorchlorpyrimidinyl, Monochlortriazinyl, Monofluortriazinyl, Dichlorchinoxalinyl oder Dichlortriazinyl,

und wobei die Gruppe $-(\underset{R_1'}{N}-Y'-Z')$ an ein Kohlenstoffatom des Reste A' und/oder B' gebunden ist.

Für die Formeln II bis IV gilt:

Zwei benachbarte Reste $R_1$, $R_2$ oder $R_3$ bzw. $R_4$, $R_5$ oder $R_6$ können beispielsweise folgende ankondensierte iso- oder heterocyclische Ringe bilden:

Zwei benachbarte Reste $R_1$, $R_2$ bzw. $R_3$:

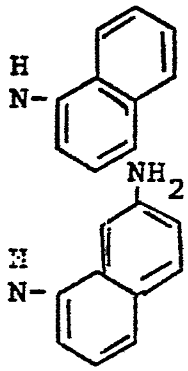 , 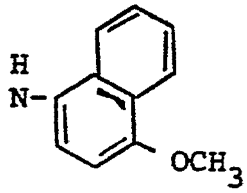 , 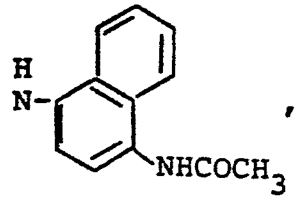 ,

Zwei benachbarte Reste $R_4$, $R_5$ oder $R_6$:

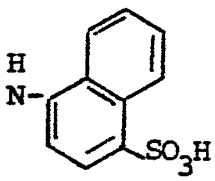

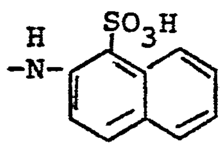

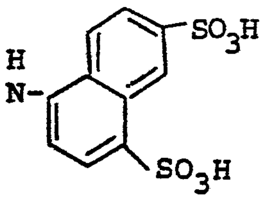

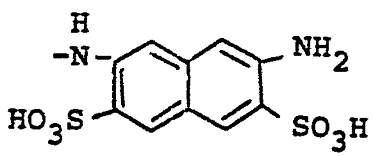

$R_1$ - $R_3$ sowie $R_3$ - $R_6$ = Alkyl-($C_1$-$C_4$) steht vorzugsweise für Methyl und Ethyl;

$R_1$ - $R_3$ sowie $R_4$ - $R_6$ = Alkoxy steht vorzugsweise für Alkoxy-($C_1$-$C_4$), insbesondere für Methoxy und Ethoxy;

$R_1$ - $R_3$ sowie $R_4$ - $R_6$ = Aryloxy steht vorzugsweise für Phenoxy;

$R_1$ - $R_3$ sowie $R_4$ - $R_6$ = Halogen steht vorzugsweise für Chlor;

$R_1$ - $R_3$ sowie $R_4$ - $R_6$ = Carboxyalkoxy steht vorzugsweise für Carboxymethoxy;

$R_1 - R_3$ sowie $R_4 - R_6$ = gegebenenfalls substituiertes Amino steht vorzugsweise für unsubstituiertes Amino und Phenylamino;

$R_1 - R_3$ sowie $R_4 - R_6$ = Acylamino steht vorzugsweise für Acetylamino, Propionylamino, Benzoylamino;

$R_1 - R_3$ sowie $R_4 - R_6$ = Alkylsulfonyl steht vorzugsweise für Alkyl-$(C_1-C_4)$sulfonyl insbesondere für Methylsulfonyl und Ethylsulfonyl;

$R_1 - R_3$ sowie $R_4 - R_6$ = Arylsulfonyl steht vorzugsweise für Phenylsulfonyl und Naphthylsulfonyl.

Die Farbstoffe der Formel I erhält man beispielsweise durch Umsetzung von Verbindungen der Formel

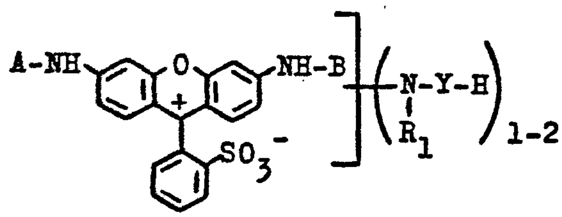

V

mit Reaktivkomponenten der Formel

Z-Halogen VI

worin Z die oben aufgeführte Bedeutung hat und Halogen F, Cl oder Br ist,

und gegebenenfalls anschließende Sulfonierung.

Die Kondensation der Diarylaminoxanthen-Verbindungen der Formel V mit den Reaktivkomponenten VI wird entweder in wäßrigem oder wäßrigorganischem Medium in Abhängigkeit von der eingesetzten Reaktivkomponente bei Temperaturen von 0 - 80°C und pH-Werten von 3 - 9 in Gegenwart alkalischer Kondensationsmittel, wie wäßriger Alkalihydrogencarbonat-, Alkalicarbonat-, Alkalihydroxid-, Alkalihydrogenphosphat-, Dialkalihydrogenphosphat- oder Trialkaliphosphat-Lösung, durchgeführt, oder aber die Kondensation wird in aprotischen organischen Lösungsmitteln, wie Toluol, Halogenbenzolen, Nitrobenzol, Dimethylformamid, N-Methylpyrrolidon, Tetramethylensulfon, Dimethylsulfoxid, Aceton, Methylethylketon, gegebenenfalls in Gegenwart aprotischer organischer Basen, wie Trialkylamin, N,N-Dialkylanilin, Pyridin oder Alkylpyridinen, bei Temperaturen von 0 - 80°C vollzogen.

Bevorzugt sind wasserlösliche Reaktivfarbstoffe der Formel I. Die Einführung von zusätzlichen wasserlöslichmachenden Sulfonsäuregruppen kann durch Sulfonierung vor und/oder nach der Einführung der faserreaktiven Reste Z und/oder durch Kondensation mit bereits Sulfonsäuregruppen oder andere wasserlöslichmachende Gruppen, wie Sulfato oder Carboxyl, enthaltenden Reaktivkomponenten erfolgen. Ist Z = Dihalogentriazinyl, so kann in den entstehenden Dihalogentriazinyl-farbstoffen der Formel I je Triazinsystem ein weiteres Halogenatom ausgetauscht werden, bevorzugt gegen solche Reste, die wasserlöslichmachende Gruppen, wie $SO_3H$, $OSO_3H$, COOH enthalten.

Gegenstand der Erfindung sind auch die neuen Verbindungen der Formel V, insbes. die Verbindungen der Formeln II, III, IV und IVa mit Z bez. Z' = H, die sich herstellen lassen, indem man d nach bekannten Verfahren erhaltene 3,6-Dichlor-9-(2-sulfophenyl)-xanthyliumbetain der Formel

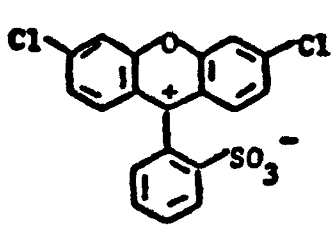

VII

mit Aminen A-$NH_2$ und B-$NH_2$, z.B. in erster Stufe mit sulfonsäuregruppenhaltigen aromatischen Aminoverbindungen der allgemeinen Formel

$$(HO_3S)_q\text{—}A\text{—}(NH_2)_p \quad \text{VIII} \qquad (q = 1, 2 \text{ oder } 3) \; (p = 1 \text{ oder } 2)$$

und in zweiter Stufe mit sulfonsäuregruppenfreien aromatischen Verbindungen der Formel

$$(H_2N)_r\text{—}B \quad \text{IX} \qquad (r = 1 \text{ oder } 2)$$

zur Umsetzung bringt.

Die erste Umsetzungsstufe wird zweckmäßig in Wasser bei Temperaturen von 90 - 130°C ausgeführt. Für Umsetzungen über 100°C verwendet man geschlossene Reaktionsgefäße. Die zweite Umsetzungsstufe wird entweder mit einem Überschuß des aromatischen Amins als Lösungsmittel oder in Gegenwart eines dipolaren aprotischen Lösungsmittels, vorzugsweise Dimethylformamid oder N-Methylpyrrolidon, bei Temperaturen von 90 - 160°C ausgeführt.

Geeignete Ausgangsmaterialien der allgemeinen Formel VIII sind beispielsweise:

2-Amino-benzolsulfonsäure, 3-Amino-benzolsulfonsäure, 4-Amino-benzolsulfonsäure, 4-Amino-toluolsulfonsäure-2, 4-Amino-anisolsulfonsäure-2, 5-Amino-2-phenoxy-benzolsulfonsäure-2, 4-Nitro-anilinsulfonsäure-2, 6-Nitro-3-amino-benzolsulfonsäure, 2-Nitro-4-amino-benzolsulfonsäure, 3-Amino-4-methyl-5-nitro-benzolsulfonsäure, 2-Amino-benzol-1,4-disulfonsäure, 1-Amino-benzol-3,5-disulfonsäure, 4-Amino-naphthalin-1,7-disulfonsäure, 4-Amino-naphthalin-1,3,7-trisulfonsäure, 2,4-Diamino-benzolsulfonsäure, 2,5-Diamino-benzolsulfonsäure, 4,4'-Diamino-diphenylamino-sulfonsäure-2, 5-Amino-2-oxal-amino-benzolsulfonsäure, 4,6-Diamino-toluol-3-sulfonsäure, 2,6-Diamino-toluol-3-sulfonsäure, 2,6-Diamino-toluol-4-sulfonsäure, 4,6-Diamino-benzol-1,3-disulfonsäure, 2,5-Diamino-benzol-1,3-disulfonsäure, 4-Nitro-4'-amino-diphenylamin-2-sulfonsäure, 4,8-Diamino-naphthalin-2,6-disulfonsäure, 3,6-Diamino-naphthalin-2,7-disulfonsäure.

Falls die zweite Aminogruppe durch einen Acylrest geschützt ist, wird dieser vor Umsetzung mit der Reaktivkomponente durch Erhitzen in saurem Medium abgespalten.

Geeignete Verbindungen der allgemeinen Formel IX sind beispielsweise:
Anilin, 2-Toluidin, 3-Toluidin, 4-Toluidin, 2-Anisidin, 3-Anisidin, 4-Anisidin, 4-Phenetidin, 1-Amino-2,4-dimethyl-benzol, 2-Amino-1,3-dimethyl-benzol, 2-Amino-1,3-

dimethoxy-benzol, 2-Amino-1,4-dimethoxy-benzol, 4-Chloranilin, 4-Amino-diphenylamin, 4-Amino-4'-methyl-diphenylamin, 4-Amino-4'-methoxy-diphenylamin, 4-Amino-acetanilid, 3-Amino-acetanilid, 4-Amino-2-acetylamino-toluol, 2-Amino-4-acetylamino-toluol.

Acylgruppen, die zum Schutz der zweiten Aminogruppe eingeführt wurden, lassen sich auch hier vor Umsetzung mit der Reaktivkomponente durch Erhitzen in saurem Medium abspalten.

Die neuen Farbstoffe im Nuancenbereich rot bis blau sind wertvolle Reaktivfarbstoffe, die sich durch hohe Farbstärken auszeichnen und sich zum Färben und Bedrucken von hydroxylgruppenhaltigen und stickstoffhaltigen Textilmaterialien, insbesondere für Textilmaterialien aus nativer und regenerierter Cellulose, eignen.

Bei Temperaturangaben in den Beispielen handelt es sich um °C. Die Formeln der wasserlöslichen Farbstoffe in der Beschreibung und in den Beispielen sind die der freien Säuren. Handelt es sich um Reaktivfarbstoffe, dann werden diese in der Regel in Form ihrer Alkalisalze, insbesondere der Natrium- oder Kaliumsalze, isoliert und angewandt.

Beispiel 1

19,2 g 3-(4"-Aminophenylamino)-6-(4"'-methoxy-3"'-sulfophenylamino)-9-(2'-sulfophenyl)xanthyliumbetain werden in 300 ml Wasser bei pH 11,0 - 11,5 durch Zugabe von konzentrierter Natronlauge gelöst. Anschließend wird durch Zugabe von Essigsäure der pH auf 7,0 gebracht und innerhalb von 15 Minuten 5,6 g 2,4,6-Trifluor-5-chlorpyrimidin bei Raumtemperatur zutropfen lassen. Hierbei wird durch Zugabe von 20 %iger Sodalösung der pH-Wert bei 6,0 - 6,5 gehalten. Es wird solange bei diesem pH-Wert nachgerührt, bis im Chromatogramm kein Einsatzmaterial mehr festzustellen ist. Nach Zugabe von 60 g Natriumchlorid wird auf 80° erwärmt, filtriert und der isolierte Farbstoff bei 60° im Vakuum getrocknet.

Der Farbstoff entspricht in Form der freien Säure der Formel

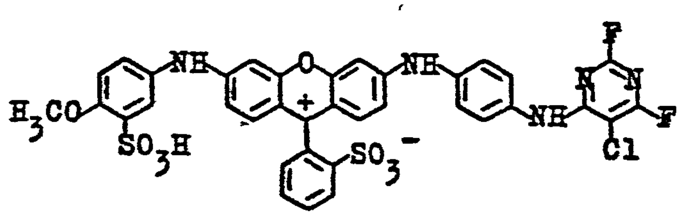

und färbt Baumwolle aus langer Flotte in kräftigen, licht- und naßechten, rotstichigen Blautönen.

Das oben eingesetzte Xanthyliumbetain-Derivat läßt sich beispielsweise folgendermaßen herstellen.

206 g 3,6-Dichlor-9-(2-sulfo-phenyl)-xanthyliumbetain werden mit 1500 ml Wasser verrührt und 120 g 4-Amino-anisol-2-sulfonsäure 95 %ig zugesetzt. Im Autoklaven erwärmt man das Reaktionsgemisch innerhalb von 2 h auf 120°C und hält die Temperatur 6 h, wobei der Druck bis auf 3 atm ansteigt. Danach läßt man den Ansatz unter Rühren auf Raumtemperatur abkühlen, saugt die ausgefallene Verbindung der Formel:

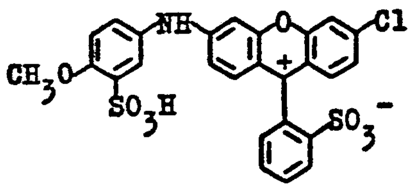

ab und wäscht sie mit 1500 ml Wasser.

254 g der nach obigen Angaben hergestellten Xanthenverbindung werden mit 350 g 4-Amino-acetanilid 87 %ig und 500 g Dimethylformamid 6 h bei 100°C gerührt. Der Ansatz wird dann auf eine Mischung von 7000 ml Wasser und 3000 ml 10 %iger Salzsäure ausgetragen, der ausgefallene Farbstoff nach mehrstündigem Rühren abgesaugt und mit wenig Wasser gewaschen. Der feuchte Rückstand wird in 5000 ml 10 %iger Salzsäure suspendiert, auf 100°C erwärmt und 6 h bei dieser Temperatur gerührt.

Nach Abkühlen auf Raumtemperatur wird abgesaugt, mit Wasser gewaschen und getrocknet. Die erhaltene Farbstoffkomponente entspricht der Formel:

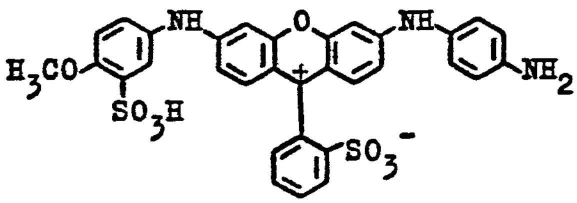

Weitere Reaktivfarbstoffe, die für das Färben und Bedrucken von Cellulosefasern in blauen Tönen geeignet sind, werden erhalten, wenn man die Reaktivkomponenten der Tabelle I mit der Farbstoffkomponente des Beispiels 1 im Molverhältnis 1 : 1 kondensiert:

**Tabelle I**

| Nr. | Reaktivkomponente | Nr. | Reaktivkomponente |
|---|---|---|---|
| 2 | 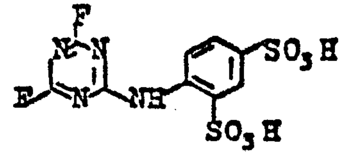 | 8 | 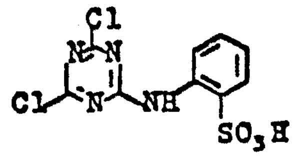 |
| 3 | 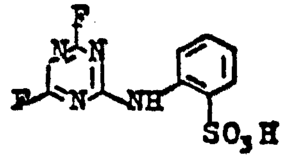 | 9 | 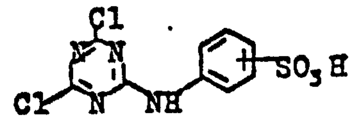<br>m:p = 1:1 |
| 4 | 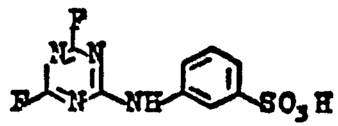 | 10 | 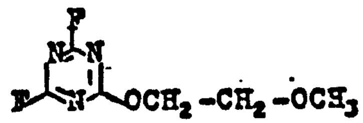 |
| 5 | 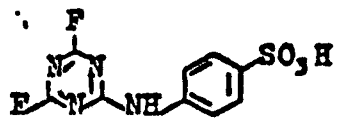 | 11 | 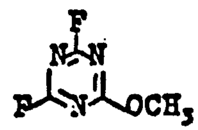 |
| 6 | 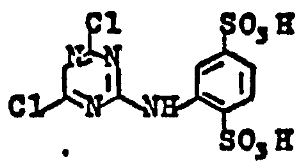 | 12 | 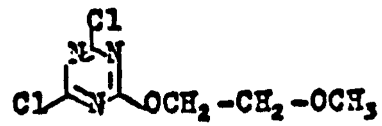 |
| 7 | 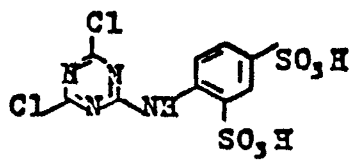 | 13 | 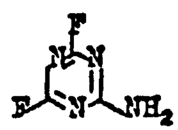 |

Tabelle I (Fortsetzung)

| Nr. | Reaktivkomponente | Nr. | Reaktivkomponente |
|---|---|---|---|
| 14 | 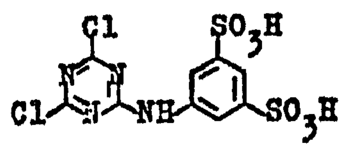 | 17 | 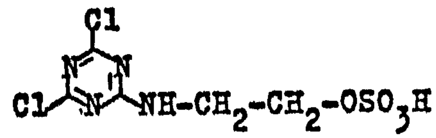 |
| 15 | 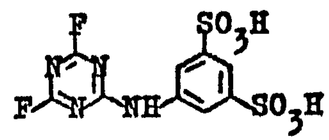 | 18 | 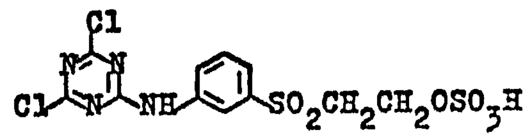 |
| 16 | 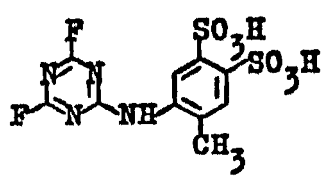 | 19 | 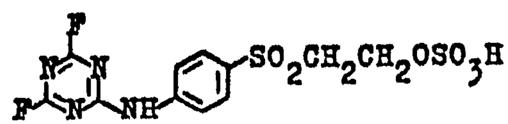 |
| | | 20 | 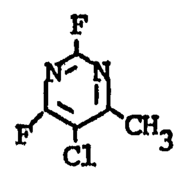 |

Tabelle I (Fortsetzung)

| Nr. | Reaktivkomponente | Nr. | Reaktivkomponente |
|---|---|---|---|
| | | 21 | 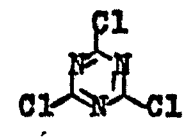 |
| | | 22 | 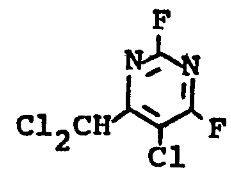 |
| | | 23 | 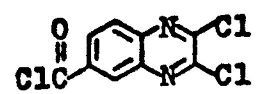 |

Beispiel 24

14,1 g (3-(5"-Amino-2"-methylphenylamino)-6-(2'",5'"-disulfophenylamino-9-(2'-sulfophenyl)xanthyliumbetain werden in 280 ml Wasser bei pH 6,5 gelöst. Anschließend läßt man 4,25 g 2,4,6-Trifluor-5-chlorpyrimidin in 15 Minuten zutropfen und hält den pH-Wert mittels 10 %iger Sodalösung bei 6,0 - 7,0. Zur Beendigung der Kondensation rührt man noch 1 Stunde bei pH 6,0 - 7,0 weiter, setzt 125 g Natriumchlorid zu und filtriert bei 45° den ausgefallenen Farbstoff ab, vermischt ihn mit einer Lösung von 2 g $NaH_2PO_4$ x 2 $H_2O$ und 2,5 g $Na_2HPO_4$ x 12 $H_2O$ in 10 ml Wasser und trocknet bei 60° im Vakuum.

Der Farbstoff entspricht in Form der freien Säure der Formel

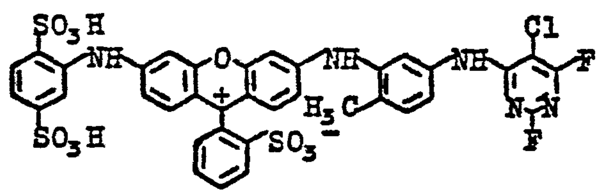

50 g Baumwollstrang werden in 1 ltr. Färbeflotte, die 1,5 g obigen Farbstoffes enthält, gefärbt, indem man innerhalb 30 Minuten auf 40° heizt. 50 g Natriumsulfat in mehreren Anteilen zugibt, anschließend 20 g Soda zufügt und 60 minuten bei dieser Temperatur behandelt. Nach dem Spülen, kochendem Seifen und Trocknen erhält man eine sehr naßechte violette Färbung mit guter Lichtechtheit.

Das oben eingesetzte Xanthyliumbetain-Derivat läßt sich beispielsweise folgendermaßen herstellen: 200,3 g 3,6-Dichlor-9-(2-sulfo-phenyl)-xanthyliumbetain werden mit 1500 ml Wasser verrührt und 145 g 2-Amino-benzol-1,4-disulfonsäure eingetragen. Man erwärmt das Reaktionsgemisch innerhalb von 2 h auf 100°C und rührt 24 h bei dieser Temperatur. Nach Abkühlen salzt man mit 400 g Kochsalz aus, saugt das Zwischenprodukt der Formel:

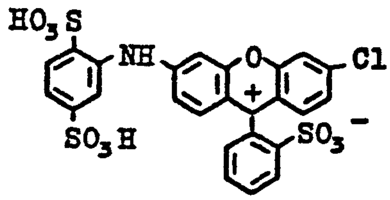

ab, wäscht es mit 1000 ml 20 %iger Kochsalzlösung und trocknet.

357 g des oben beschriebenen Zwischenproduktes werden mit 273 g 2-Amino-4-acetylamino-toluol und 640 g Dimethylformamid 7 h auf 100°C erwärmt. Das Reaktionsgemisch wird auf 6400 ml Wasser und 2730 ml 10 %ige Salzsäure ausgetragen und der Farbstoff mit 1820 g Kochsalz ausgesalzen. Nach mehrstündigem Rühren bei Raumtemperatur isoliert man den Farbstoff durch Absaugen und wäscht ihn mit 1500 ml 10 %iger Kochsalzlösung. Der feuchte Rückstand wird mit 4500 ml 10 %iger Salzsäure 22 h bei 100°C gerührt, nach Abkühlen auf Raumtemperatur abgesaugt, mit 4 l Wasser gewaschen und getrocknet. Die so erhaltene Farbstoffkomponente entspricht der Formel:

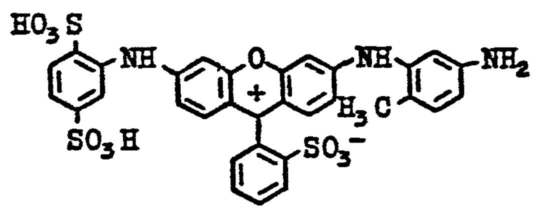

Beispiel 25

3,9 g 2-Aminobenzolsulfonsäure werden in 50 ml Wasser bei pH 3 - 4 gelöst. Zu dieser Lösung tropft man bei 0 - 5° 3,8 g Cyanurfluorid in 10 Minuten zu und hält den pH-Wert mittels 10 %iger Sodalösung bei 3,5 - 4 (Reaktivkomponente).

9,4 g Farbstoffkomponente der Formel

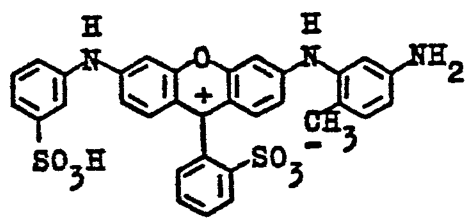

werden in 250 ml Wasser bei pH 11,0 - 11,5 gelöst. Diese Lösung wird auf pH 7,0 gestellt und innerhalb von 15 Minuten bei 0 - 5° in die Reaktivkomponentenlösung nach Absatz 1 eintropfen lassen. Hierbei wird der pH-Wert bei 4,0 - 4,5 gehalten. Es wird anschließend bei pH 6,0 auf Raumtemperatur erwärmen lassen. Nach 2 Stunden wird mit 50 g Natriumchlorid ausgesalzen, filtriert und mit 15 %iger Natriumchloridlösung gewaschen und bei 60° im Vakuum getrocknet.

Der Farbstoff entspricht in Form der freien Säure der Formel

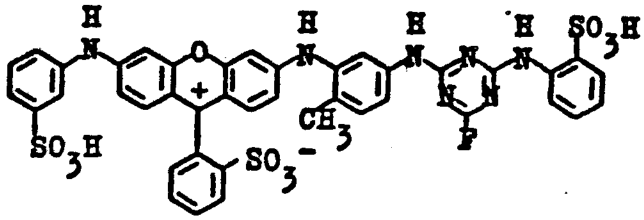

und färbt Baumwolle aus langer Flotte nach den für Reaktivfarbstoffe bekannten Färbetechniken in kräftigen Rotviolettönen, die gute Licht- und Naßechtheiten aufweisen.

Das oben eingesetzte Xanthyliumbetain-Derivat läßt sich beispielsweise folgendermaßen herstellen: 101,5 g 3,5-Dichlor-9-(2-sulfo-phenyl)-xanthyliumbetain werden in 850 ml Wasser verrührt und 43,3 g 3-Aminobenzolsulfonsäure 98 %ig zugegeben. Man erwärmt das Reaktionsgemisch innerhalb von 2 h auf 100°C und läßt es weitere 2 h bei 100°C rühren. Nach dem Abkühlen salzt man mit 85 g NaCl aus, läßt einige Stunden bei Raumtemperatur nachrühren und isoliert dann das Zwischenprodukt der Formel

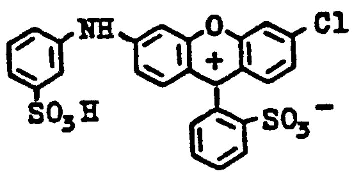

durch Absaugen. Der Rückstand wird mit 1 l 10 %iger Kochsalzlösung gewaschen und getrocknet.

25 g des oben beschriebenen Zwischenproduktes werden mit 30 g 2-Amino-4-acetylamino-toluol und 150 g Dimethylformamid zunächst 3 h auf 100°C und dann 18 h auf 120°C

erhitzt. Das Reaktionsgemisch wird anschließend auf 700 ml Wasser und 300 ml 10 %ige Salzsäure ausgetragen, die Lösung mit 100 g Kochsalz ausgesalzen, der Niederschlag nach mehrstündigem Rühren bei Raumtemperatur abgesaugt und mit 100 ml 10 %iger Kochsalzlösung gewaschen. Der feuchte Preßkuchen wird in 500 ml 10 %iger Salzsäure suspendiert, 6 h bei 100°C gerührt, nach Abkühlen abgesaugt, mit 1 l Wasser gewaschen und getrocknet. Die erhaltene Farbstoffkomponente entspricht der Formel des Absatzes 2 dieses Beispiels.

Setzt man die in Spalte 2 der Tabelle II aufgezeigten Farbstoffkomponenten mit den Reaktivkomponenten der Spalte 3 im Molverhältnis 1:1 um, so erhält man analog zu den Beispielen 24 und 25 weitere für das Färben und Bedrucken von Cellulosefasern geeignete violett-blaue Reaktivfarbstoffe, in denen die Reaktivgruppe mit der Aminogruppe der Farbstoffkomponente verknüpft ist.

**Tabelle II**

| Nr. | Farbstoffkomponente | Reaktivkomponente |
|---|---|---|
| 26 | 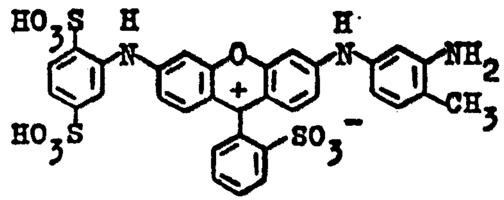 | 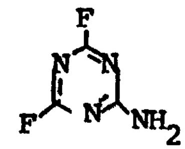 |
| 27 | " | 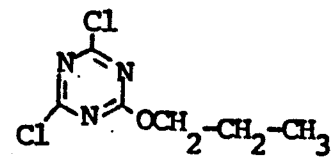 |
| 28 | " | 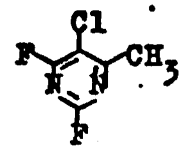 |
| 29 | 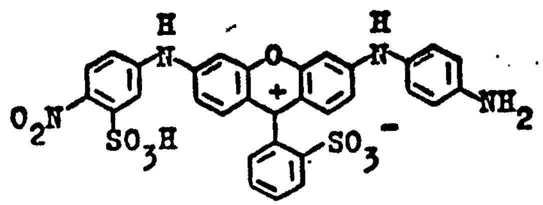 | 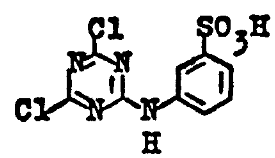 |

Tabelle II, Fortsetzung

| Nr. | Farbstoffkomponente | Reaktivkomponente |
|---|---|---|
| 30 | " | 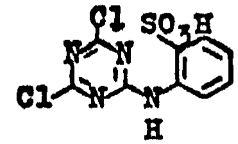 |
| 31 | 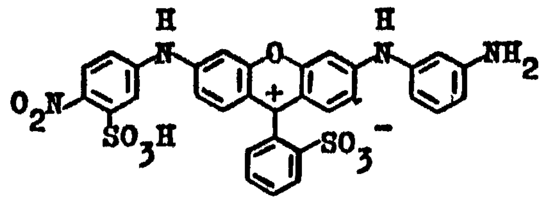 | 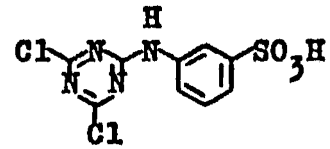 |
| 32 | 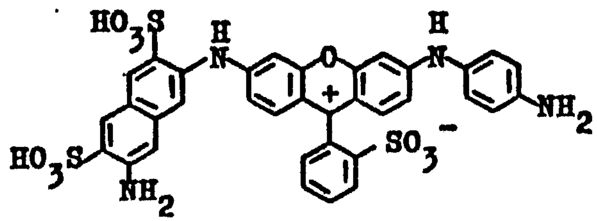 | 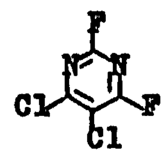 |
| 33 | 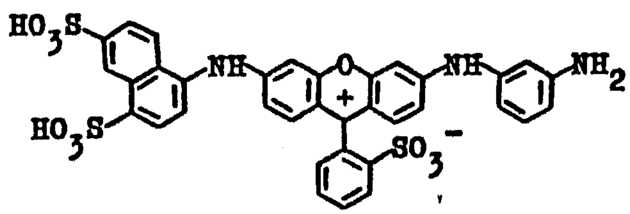 | " |

0153480

**Tabelle II, Fortsetzung**

| Nr. | Farbstoffkomponente | Reaktivkomponente |
|---|---|---|
| 34 | 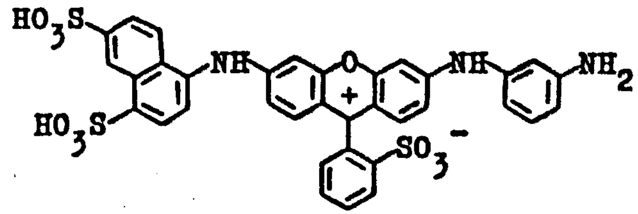 | 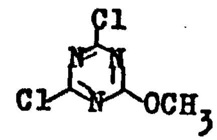 |
| 35 | 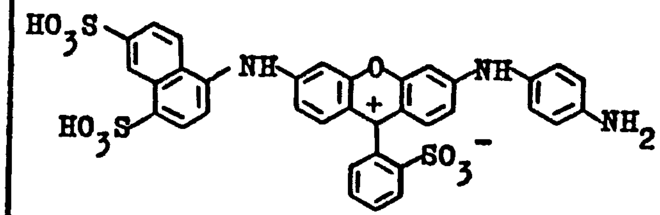 | 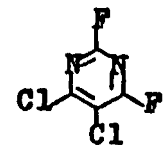 |
| 36 | „ | 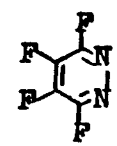 |
| 37 | 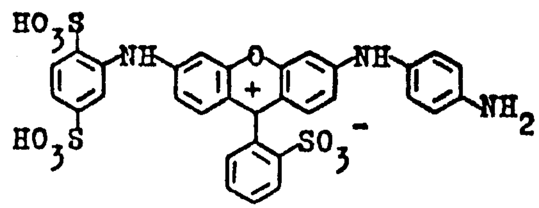 | 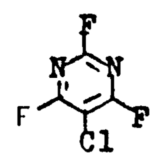 |

**Tabelle II, Fortsetzung**

| Nr. | Farbstoffkomponente | Reaktivkomponente |
|---|---|---|
| 38 | 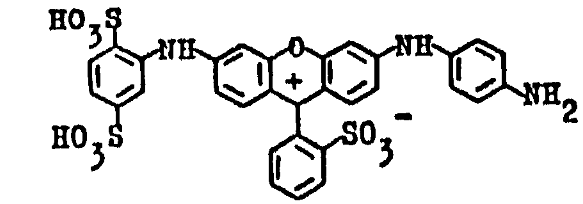 | 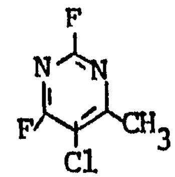 |
| 39 | " | 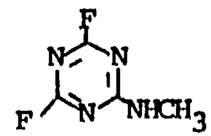 |
| 40 | " | 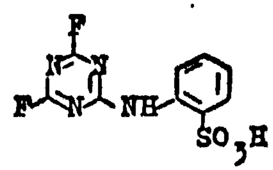 |
| 41 | 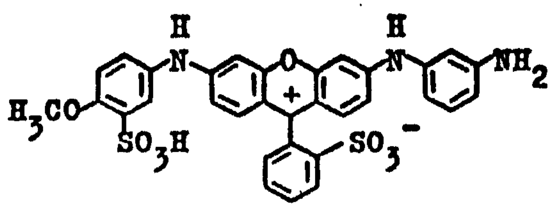 | 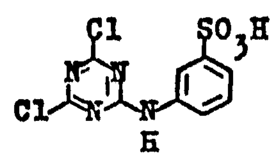 |

**Tabelle II, Fortsetzung**

| Nr. | Farbstoffkomponente | Reaktivkomponente |
|---|---|---|
| 42 | 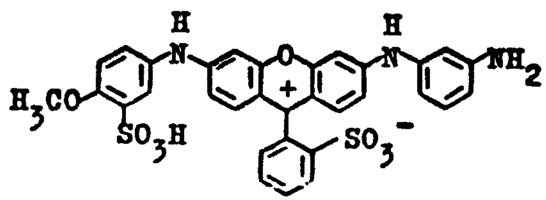 | 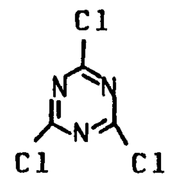 |
| 43 | 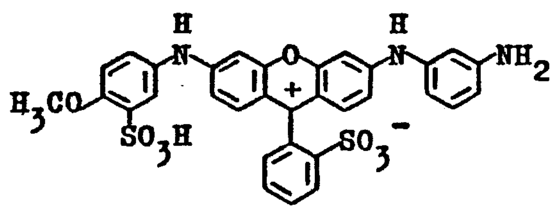 | 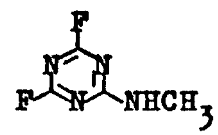 |
| 44 | " | 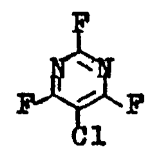 |
| 45 | " | 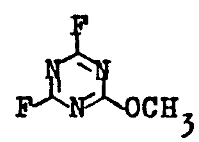 |

Tabelle II, Fortsetzung

| Nr. | Farbstoffkomponente | Reaktivkomponente |
|---|---|---|
| 46 | 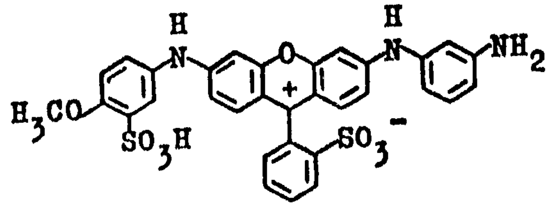 | 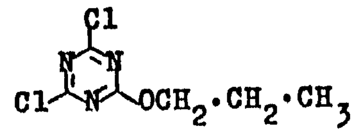 |
| 47 | 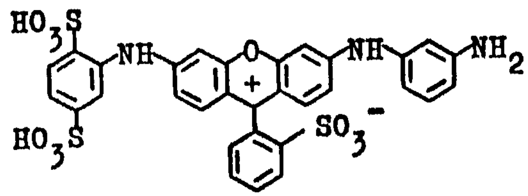 | 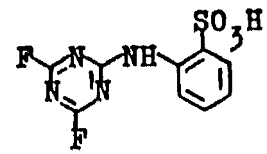 |
| 48 | " | 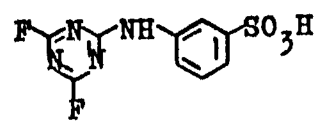 |
| 49 | 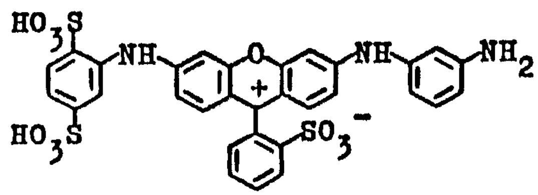 | 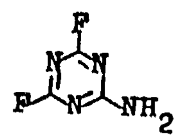 |

**Tabelle II, Fortsetzung**

| Nr. | Farbstoffkomponente | Reaktivkomponente |
|---|---|---|
| 50 | 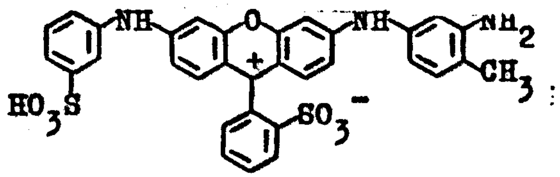 | 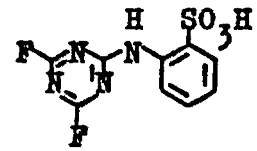 |
| 51 | " | 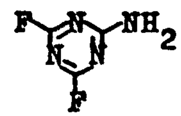 |
| 52 | " | 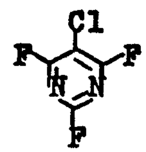 |
| 53 | " | 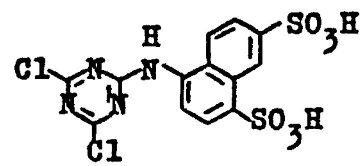 |
| 54 | 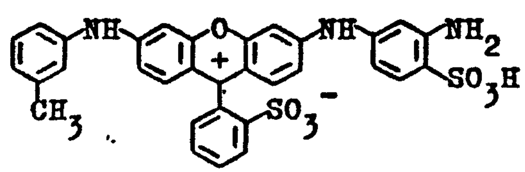 | 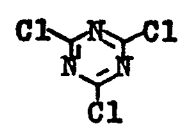 |

Beispiel 55

3,9 g 2-Aminobenzolsulfonsäure werden in 55 ml Wasser bei pH 4,0 gelöst und dann tropfenweise bei 0 - 5° mit 3,3 g Cyanurfluorid versetzt. Während des Zutropfens wird der pH-Wert mittels 10 %iger Sodalösung bei 3,5 - 4,0 gehalten. Anschließend wird nach Zugabe von 50 g Eis eine Lösung von 9,4 g der folgenden Farbstoffkomponente

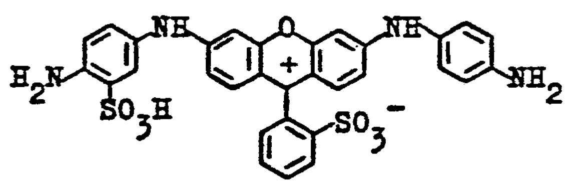

in 270 ml Wasser bei pH 4,0 - 5,0 und 0 - 5° zugetropft. Nach Einstellung eines pH von 6,0 wird noch 1 Stunde bei 0° und 1/4 Stunde bei Raumtemperatur gerührt. Anschließend wird wieder auf 0 - 5 abgekühlt und in 15 Minuten 3,3 g Cyanurfluorid eingetropft. Hierbei wird der pH-Wert mittels 10 %iger Sodalösung bei 4,8 - 5,0 gehalten. Nach Zugabe einer Lösung von 3,9 g 3-Aminobenzolsulfonsäure in 20 ml Wasser wird 1 Stunde bei 0 - 5° und pH 5,5 - 6,0 und dann noch 1 Stunde bei Raumtemperatur gerührt. Nach Zugabe von 100 g Natriumchlorid wird abgesaugt, mit 20 %iger Natriumchloridlösung gewaschen und bei 60° getrocknet.

Der Farbstoff entspricht in Form der freien Säure im wesentlichen der Formel

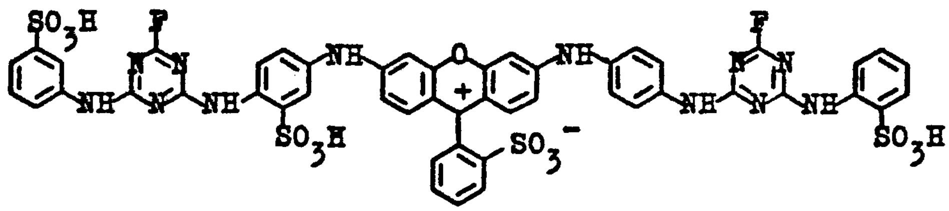

und färbt Cellulosefasern in licht- und naßechten Blautönen.

Ersetzt man die 3-Aminobenzolsulfonsäure durch äquivalente Mengen an 4-Aminobenzolsulfonsäure, 4-Aminobenzoesäure, 3-Chloranilin oder p-Toluidin, so erhält man Farbstoffe mit ähnlichen Eigenschaften.

Die oben eingesetzte Farbstoffkomponente kann beispielsweise folgendermaßen hergestellt werden:

101,5 g 3,6-Dichlor-9-(2-sulfo-phenyl)-xanthyliumbetain werden mit 750 ml Wasser verrührt und 50 g 2,5-Diaminobenzolsulfonsäure 90 %ig eingetragen. Man erwärmt das Reaktionsgemisch innerhalb von 2 h auf 100°C und läßt 2 h bei dieser Temperatur rühren. Nach dem Abkühlen auf Raumtemperatur salzt man mit 75 g Kochsalz aus, saugt nach mehrstündigem Rühren bei Raumtemperatur ab, wäscht den Niederschlag mit 1 l 5 %iger Kochsalzlösung und trocknet.

26,7 g des so erhaltenen Zwischenproduktes der Formel:

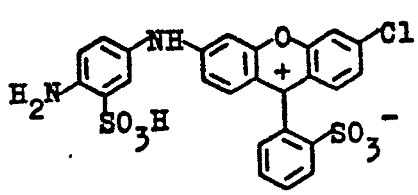

werden mit 35 g 4-Amino-acetanilid 87 %ig und 50 g Dimethylformamid 3 h bei 100°C gerührt. Das Reaktionsgemisch wird auf 700 ml Wasser und 300 ml 10 %ige Salzsäure ausgetragen. Der gebildete Niederschlag wird nach mehrstündigem Rühren abgesaugt und mit 100 ml Wasser gewaschen. Der feuchte Rückstand wird in 500 ml 10 %iger Salzsäure suspendiert und 2 h bei 100°C gerührt. Nach Abkühlen auf Raumtemperatur saugt man den gebildeten Farbstoff ab, wäscht ihn mit 2 l Wasser, bis der zunächst rote Ablauf nahezu farblos ist, und trocknet.

Die erhaltene Farbstoffkomponente entspricht der im Absatz 1 angegebenen Formel.

Beispiel 56

9,4 g der Farbstoffkomponente

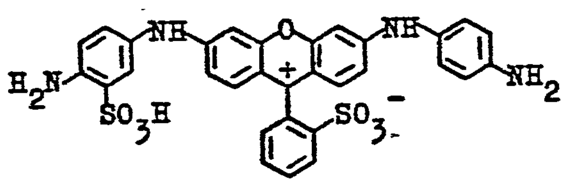

werden in 300 ml Wasser und 30 g ε-Caprolactam gelöst und bei pH 6 - 7 mit 3,4 g 2,4,6-Trifluor-5-chlorpyrimidin versetzt. Durch Zugabe von 10 %iger Sodalösung wird hierbei der pH-Wert bei 6,0 - 7,0 gehalten. Nach Abkühlung des Reaktionsgemisches auf 0 - 5° tropft man in 10 Minuten 3,3 g Cyanurfluorid ein und hält hierbei den pH-Wert bei 4,5 - 5,0. Nach 15 Minuten wird eine Lösung von 3,9 g 3-Aminobenzolsulfonsäure in 20 ml Wasser

zugegeben und 2 Stunden bei 0 - 5° und pH 5,5 - 6,0 nachgerührt. Nach Erwärmen auf Raumtemperatur wird mit 100 g Natriumchlorid ausgesalzen, abgesaugt, mit 15 %iger Natriumchloridlösung gewaschen und bei 60° im Vakuum getrocknet.

Der erhaltene Farbstoff, der in Form der freien Säure im wesentlichen der Formel

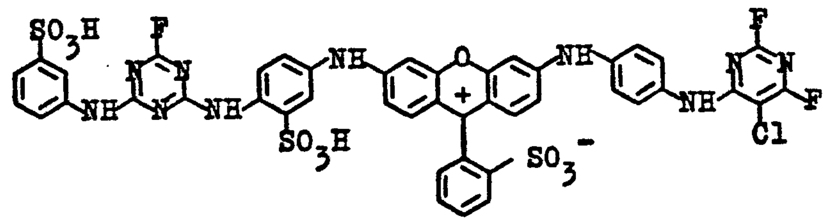

entspricht, eignet sich zum Färben oder Bedrucken von Cellulosefasern in kräftigen, echten Blautönen.

Ersetzt man im Beispiel 56 das im Absatz 1 verwendete 2,4,6-Trifluor-5-chlorpyrimidin durch die folgenden Reaktivkomponenten

57: 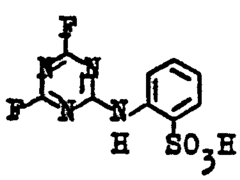 ,

58: 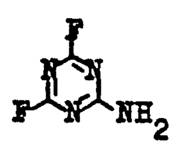 ,

59: 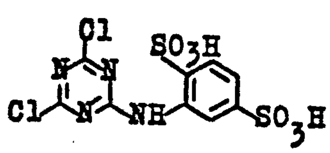

60: 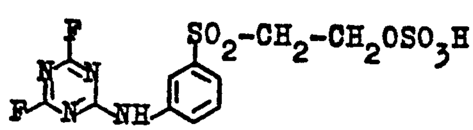

so erhält man weitere für das Färben und Bedrucken von Cellulosefasern geeignete blaue Reaktivfarbstoffe.

Beispiel 61

10,6 g der folgenden Farbstoffkomponente

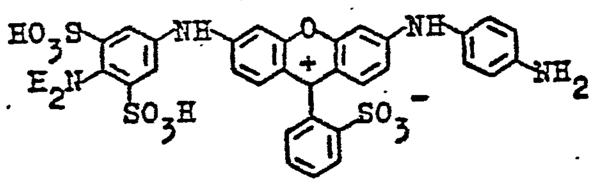

werden in 300 ml Wasser bei pH 10,0 - 11,0 durch Zusatz von 40 %iger Natronlauge gelöst. Anschließend wird durch Zugabe von Essigsäure auf pH 7,0 gestellt und auf 0 - 5° abgekühlt. Dann läßt man 4,7 g 2,4,6-Trifluor-5-chlor-pyrimidin zutropfen. Im Reaktionsgemisch hält man den pH-Wert mit 10 %iger Sodalösung bei 6,5 - 7,0. Nachdem chromatographisch kein Einsatzmaterial mehr nachzuweisen ist, läßt man auf Raumtemperatur erwärmen und stellt den pH auf 5,0. Nach Zugabe von 120 g Natriumchlorid wird abgesaugt, mit wenig 15 %iger Natriumchloridlösung gewaschen und im Vakuum bei 60° getrocknet.

Der Farbstoff, der im wesentlichen in Form der freien Säure der Formel

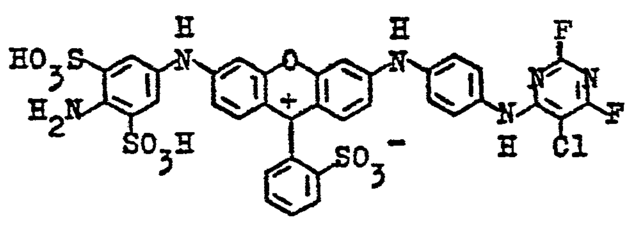

entspricht, färbt Baumwolle aus langer Flotte in kräftigen, naßechten, rotstichigen Blautönen.

Das oben eingesetzte Xanthyliumbetain-Derivat läßt sich beispielsweise folgendermaßen herstellen:

162,4 g 3,6-Dichlor-9-(2-sulfo-phenyl)-xanthyliumbetain werden mit 1200 ml Wasser verrührt und 135,2 g 2,5-Diamino-benzol-1,3-disulfonsäure 79 %ig eingetragen. Man erwärmt das Reaktionsgemisch innerhalb von 2 h auf 100°C und läßt 3 h bei dieser Temperatur rühren. Man salzt in der Wärme mit 240 g Kochsalz aus und läßt die Suspension über Nacht auf Raumtemperatur abkühlen. Dann saugt man das Zwischenprodukt der Formel:

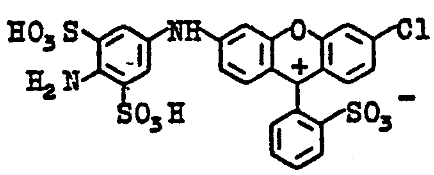

ab, wäscht es mit 1 l 20 %iger Kochsalzlösung und trocknet es.

36,8 g dieses Zwischenproduktes werden mit 35 g 4-Amino-acetanilid 87 %ig und 70 ml Dimethylformamid 3 h bei 100°C gerührt. Das Reaktionsgemisch wird auf 500 ml Wasser und 500 ml 10 %ige Salzsäure ausgetragen, der ausgefallene Niederschlag nach mehrstündigem Rühren bei

0153480

Raumtemperatur abgesaugt und mit 200 ml Wasser gewaschen. Der feuchte Preßkuchen wird mit 500 ml 10 %iger Salzsäure 22 h bei 100°C gerührt, abgesaugt und mit 250 ml Wasser gewaschen. Man erhält 21,3 g der oben eingesetzten Farbstoffkomponente.

Setzt man die in Spalte 2 der Tabelle III aufgezeigten Xanthyliumbetain-Derivate mit den Reaktivkomponenten der Spalte 3 im Molverhältnis 1:1 um, so erhält man analog zum Beispiel 61 weitere für das Färben und Bedrucken von Cellulosefasern geeignete violett-blaue Reaktivfarbstoffe, in denen die Reaktivgruppe mit der Aminogruppe des sulfogruppen-freien Aminophenylamino-Substituenten des Xanthyliumbetain-Derivates verknüpft ist.

Tabelle III

| Nr. | Xanthyliumbetain-Derivat | Reaktivkomponente |
|---|---|---|
| 62 | 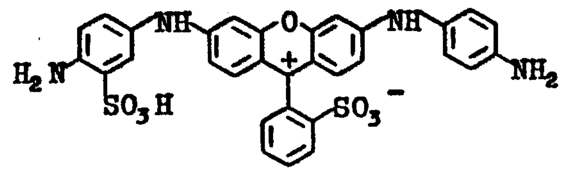 | 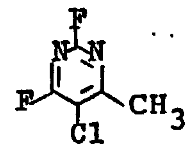 |
| 63 | " | 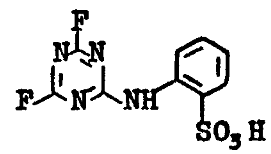 |
| 64 | " | 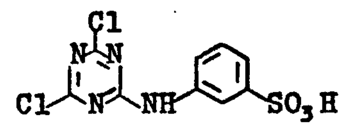 |
| 65 | 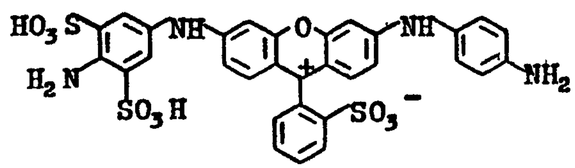 | " |

**Tabelle III, Fortsetzung**

| Nr. | Xanthyliumbetain-Derivat | Reaktivkomponente |
|---|---|---|
| 66 | 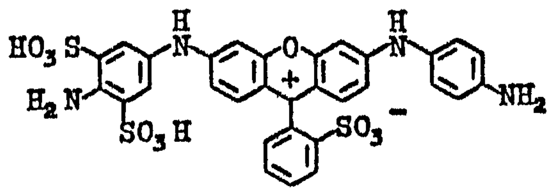 | 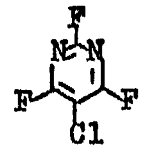 |
| 67 | " | 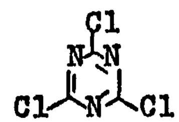 |
| 68 | " | 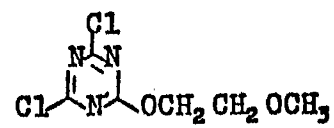 |
| 69 | 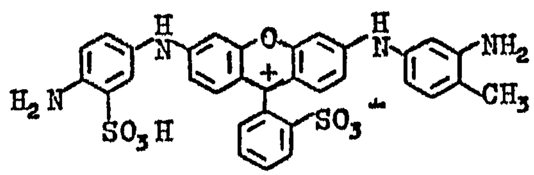 | 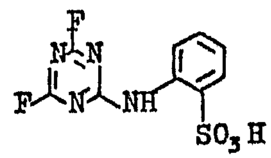 |
| 70 | " | 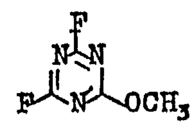 |

Tabelle III, Fortsetzung

| Nr. | Xanthyliumbetain-Derivat | Reaktivkomponente |
| --- | --- | --- |
| 71 | 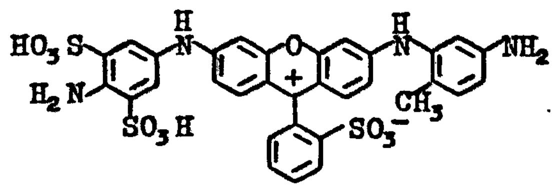 | 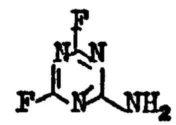 |
| 72 | " | 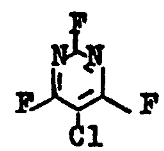 |

Beispiel 73

14,5 g 3-(3"-Amino-4",6"-disulfophenylamino)-6-(2"-methoxyphenylamino)-9-(2'-sulfophenyl)-xanthyliumbetain (Komponente 1) werden in 290 ml Wasser bei pH 7,0 gelöst und bei 0 - 5° mit einer Lösung von 4,1 g Cyanurchlorid (Komponente 2), in 25 ml Aceton gelöst, versetzt. Man hält durch Zugabe von 10 %iger Sodalösung den pH bei 5,5 - 6,5 und läßt auf Raumtemperatur erwärmen. Wenn chromatographisch kein Einsatzmaterial mehr nachweisbar ist, werden 12,1 g 3-Aminobenzolsulfonsäure (Komponente 3) in 25 ml Wasser bei pH 7 gelöst und obigem Reaktionsgemisch zugefügt. Man hält den pH durch Zugabe von 10 %iger Natronlauge bei 6,5 - 7,0. Nach beendeter Kondensation wird mit 125 g Natriumchlorid ausgesalzen, abgesaugt, mit gesättigter Kochsalzlösung gewaschen und bei 60° im Vakuum getrocknet.

Der Farbstoff entspricht in Form der freien Säure weitgehend der Formel

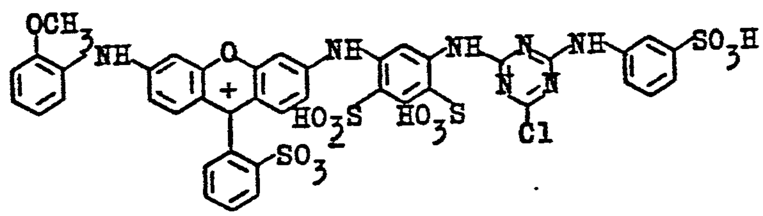

und eignet sich zum Färben und Bedrucken von Cellulosefasern in echten violetten Tönen.

Das oben eingesetzte Xanthyliumbetain-Derivat läßt sich beispielsweise folgendermaßen herstellen:

101,5 g 3,6-Dichlor-9-(2-sulfo-phenyl)-xanthyliumbetain werden in 750 ml Wasser verrührt und 50 g 2,4-Diamino-benzolsulfonsäure 89 %ig zugegeben. Man erwärmt das Reaktionsgemisch innerhalb von 2 h auf 100°C, rührt 2 h bei dieser Temperatur und läßt anschließend unter Rühren auf Raumtemperatur abkühlen. Dann salzt man das gebildete Zwischenprodukt durch Zugabe von 75 g Kochsalz aus, saugt es nach mehrstündigem Rühren ab, wäscht den Preßkuchen mit 1 l 10 %iger Kochsalzlösung und trocknet. Das Zwischenprodukt entspricht der Formel:

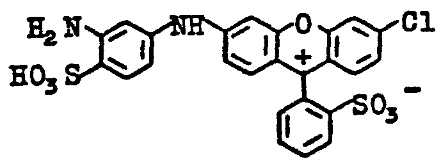

24 g dieses Zwischenproduktes werden mit 60 g o-Anisidin 3 h bei 100°C gerührt. Man trägt das Reaktionsgemisch auf 700 ml Wasser und 300 ml 10 %ige Salzsäure aus, saugt die gebildete Farbstoffkomponente nach mehrstündigem Rühren bei Raumtemperatur ab und wäscht sie mit 1 l kaltem Wasser, 500 ml heißem Wasser und trocknet. Die so erhaltene Farbstoffkomponente entspricht der Formel:

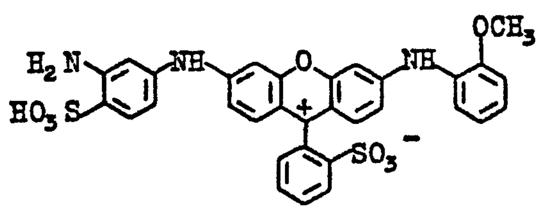

Ersetzt man im Beispiel 73 die dort aufgeführten Komponenten 1-3 durch die Komponenten der Tabelle IV und verfährt in analoger Weise, so erhält man violette bis blaue Farbstoffe von ähnlichen Eigenschaften.

Tabelle IV

| Nr | Komponente 1 | Komponente 2 | Komponente 3 |
|---|---|---|---|
| 74 | 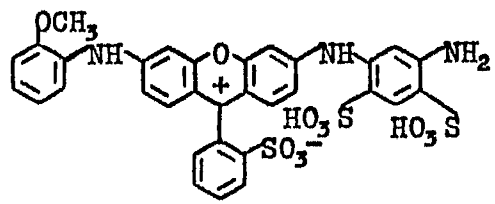 | 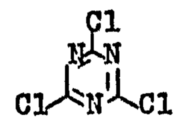 | 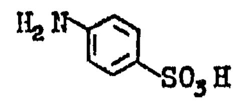 |
| 75 | " | 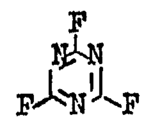 | 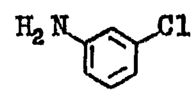 |
| 76 | " | " | $H_2N-CH_2-CH_2OH$ |
| 77 | 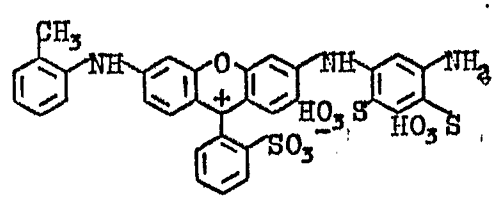 | 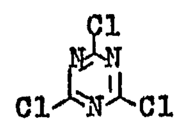 | 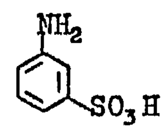 |

Tabelle IV (Fortsetzung)

| Nr | Komponente 1 | Komponente 2 | Komponente 3 |
|---|---|---|---|
| 78 | 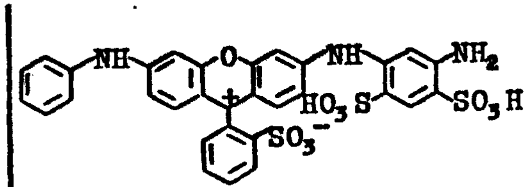 | 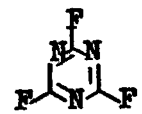 | $NH_3$ |
| 79 | " | " | $H_2N-CH_3$ |
| 80 | 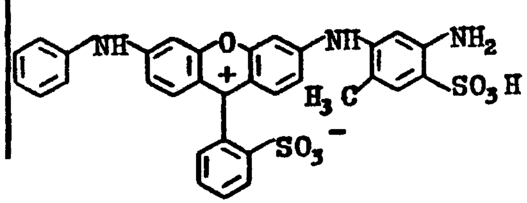 | 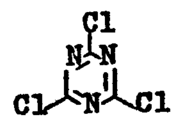 | 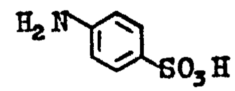 |

Tabelle IV, Fortsetzung

| Nr. | Komponente 1 | Komponente 2 | Komponente 3 |
|---|---|---|---|
| 81 | 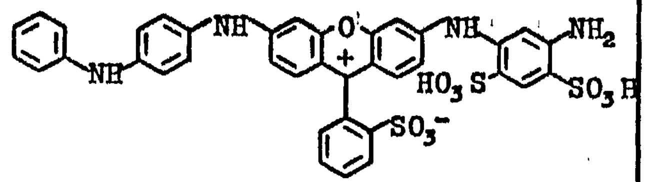 | 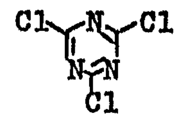 | 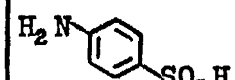 |
| 82 | 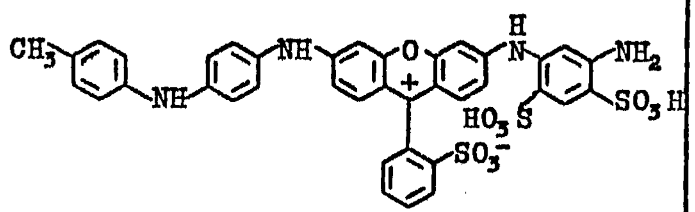 | 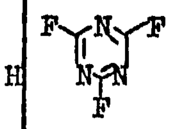 | 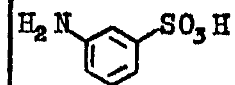 |
| 83 | 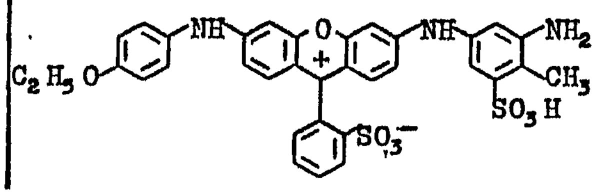 | 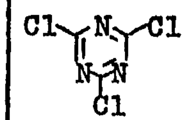 | 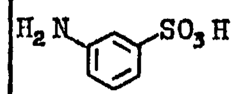 |

Beispiel 84

9,4 g 3-(4"-Aminophenylamino)-6-(4"'-methyl-3"'-sulfophenylamino)-9-(2'-sulfophenyl)-xanthyliumbetain werden in 280 ml Wasser bei pH 11,0 - 11,5 durch Zugabe konzentrierter Natronlauge gelöst. Anschließend wird durch Zugabe von Essigsäure der pH-Wert auf 7,0 eingestellt und innerhalb von 15 Minuten bei Raumtemperatur 3,4 g 2,4,6-Trifluor-5-chlorpyrimidin zutropfen lassen. Hierbei wird durch Zugabe von 10 %iger Sodalösung der pH-Wert bei 6,0 - 6,5 gehalten. Nach Beendigung der Kondensation wird mit 50 g Natriumchlorid ausgesalzen, abgesaugt, mit 10 %iger Natriumchloridlösung gewaschen und bei 60° getrocknet.

Der Farbstoff entspricht in Form der freien Säure der Formel

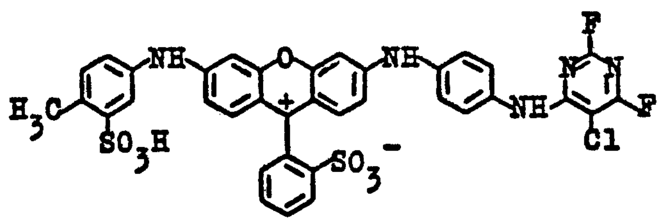

und färbt Baumwolle in naßechten, kräftigen marineblauen Tönen von guter Lichtechtheit.

Setzt man die in Spalte 2 der Tabelle V aufgezeigten Farbstoffkomponenten mit den Reaktivkomponenten der Spalte 3 im Molverhältnis 1:1 um, so erhält man analog

0153480

zu Beispiel 1, 24, 25 oder 84 weitere für das Färben und Bedrucken von Cellulosefasern geeignete violette bis blaue Reaktivfarbstoffe, in denen die Reaktivgruppe mit der Aminogruppe der Farbstoffkomponente verknüpft ist.

Die als Ausgangsmaterial verwendete Farbstoffkomponente kann beispielsweise in folgender Weise hergestellt werden:

20,6 g 3,6-Dichlor-9-(2-sulfo-phenyl)-xanthyliumbetain werden in 150 ml Wasser verrührt und 10 g 4-Amino-toluol-2-sulfonsäure 90 %ig zugegeben. Das Reaktionsgemisch wird innerhalb von 2 h auf 100°C erwärmt und 2 h bei dieser Temperatur gerührt. Nach Abkühlen auf Raumtemperatur saugt man das gebildete Zwischenprodukt ab, wäscht es mit 150 ml Wasser und trocknet es. Man erhält 27,2 g der Verbindung der Formel:

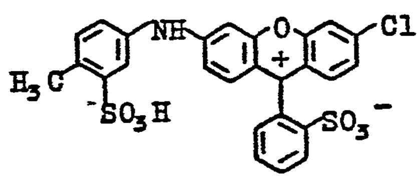

27,2 g dieses Zwischenproduktes werden mit 30 g Dimethylformamid und 35 g 4-Amino-acetanilid 87 %ig 3 h bei 100°C gerührt. Man trägt das Reaktionsgemisch auf 700 ml Wasser und 300 ml 10 %ige Salzsäure aus, saugt den gebildeten Farbstoff nach mehrstündigem Rühren bei Raumtemperatur ab und wäscht ihn mit 300 ml Wasser. Der feuchte Preßkuchen wird mit 500 ml 10 %iger Salzsäure

0153480

2 h bei 100°C gerührt, nach Abkühlen auf Raumtemperatur wird abgesaugt, mit 500 ml Wasser gewaschen und getrocknet. Die so erhaltene Komponente entspricht der Formel:

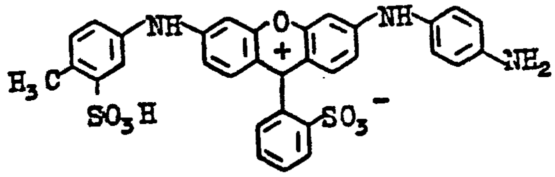

**Tabelle V**

| Nr. | Farbstoffkomponente | Reaktivkomponente |
|---|---|---|
| 85 | 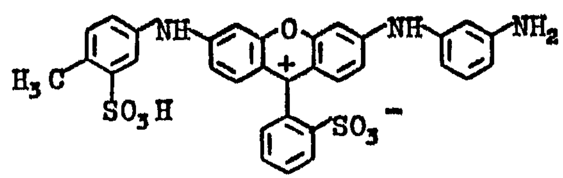 | 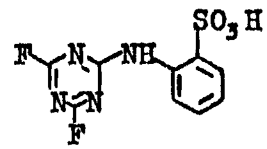 |
| 86 | " | 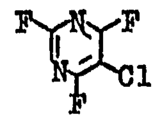 |
| 87 | " | 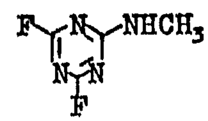 |
| 88 | 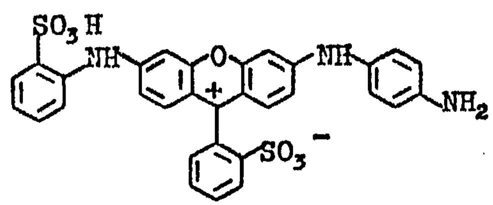 | 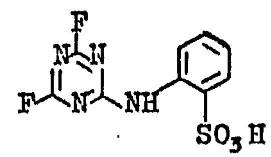 |

**Tabelle V** (Fortsetzung)

| | Farbstoffkomponente | Reaktivkomponente |
|---|---|---|
| 89 | 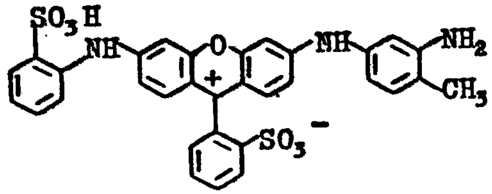 | 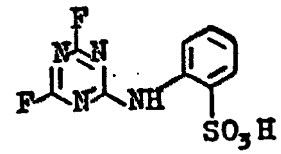 |
| 90 | 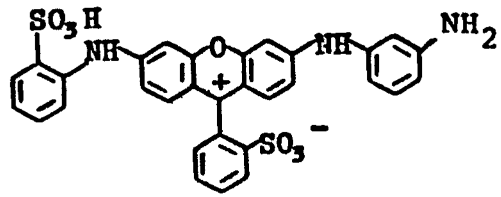 | " |
| 91 | 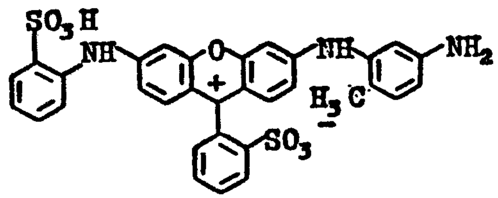 | " |
| 92 | 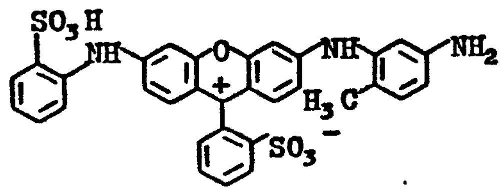 | 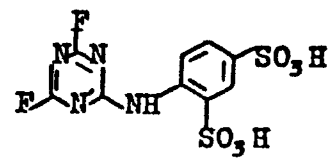 |

Tabelle V, Fortsetzung

| Nr. | Farbstoffkomponente | Reaktivkomponente |
| --- | --- | --- |
| 93 | 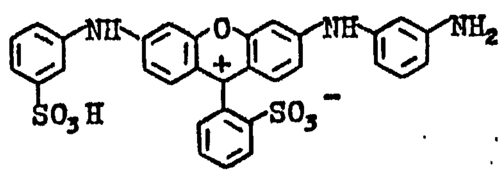 | 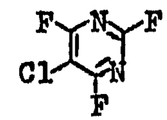 |
| 94 | 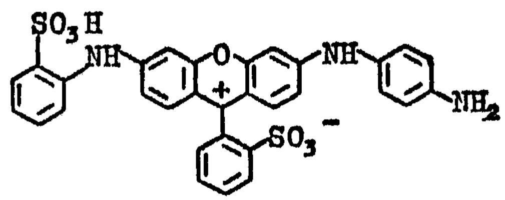 | " |
| 95 | 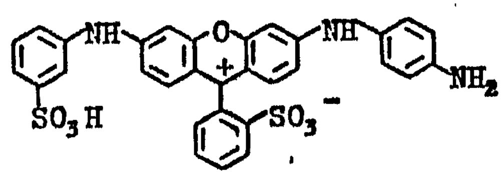 | 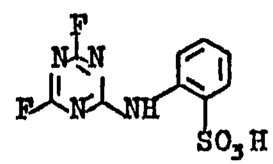 |

Tabelle V. Fortsetzung

| Nr. | Farbstoffkomponente | Reaktivkomponente |
|---|---|---|
| 96 | 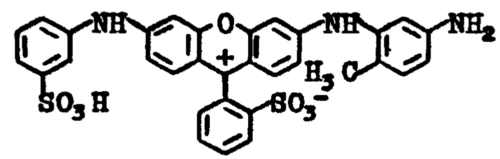 | 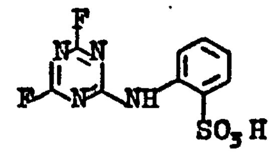 |
| 97 | 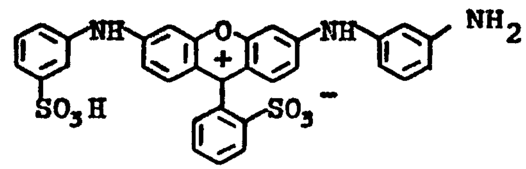 | " |
| 98 | " | 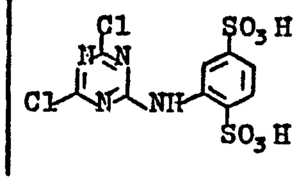 |

Tabelle V. Fortsetzung

| Nr. | Farbstoffkomponente | Reaktivkomponente |
|---|---|---|
| 99 | 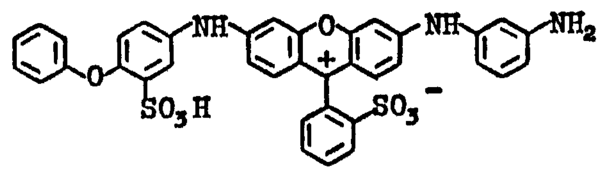 | 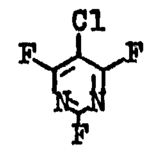 |
| 100 | " | 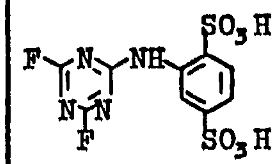 |

0153480

Beispiel 101

9,7 g 3-(4"'-Amino-3"'-sulfophenylamino)-6-(4"-chlorphenylamino)-9-(2'-sulfophenyl)-xanthyliumbetain (Komponente 1) werden in 300 ml Wasser bei pH 10,0 - 11,0 unter Zugabe von etwas Natronlauge gelöst. Der pH-Wert wird anschließend durch Zugabe von Eisessig auf pH 6,5 gestellt. Nach Abkühlen auf 0-5°C werden 3,7 g Cyanurchlorid (Komponente 2), gelöst in 20 ml Aceton, zugegeben und der pH-Wert mit 20 %iger Sodalösung bei 5,5 - 6,0 gehalten. Nach 1 Stunde wird auf Raumtemperatur erwärmt. Nach weiteren 3 Stunden bei pH 5,5 - 6,0 werden 5,3 g 3-Aminobenzolsulfonsäure (Komponente 3) bei pH 7,0, gelöst in 25 ml Wasser, zugegeben, der pH-Wert mit 20 %iger Sodalösung bei 6,0 - 6,5 gehalten uns solange bei diesem pH-Wert gerührt, bis im Chromatogramm die Beendigung der Kondensation zu erkennen ist. Nach Zugabe von 50 g Natriumchlorid wird abgesaugt, mit 10 %iger Natriumchloridlösung gewaschen und bei 60°C im Vakuum getrocknet.

Der erhaltene Farbstoff entspricht in Form der freien Säure im wesentlichen der Formel

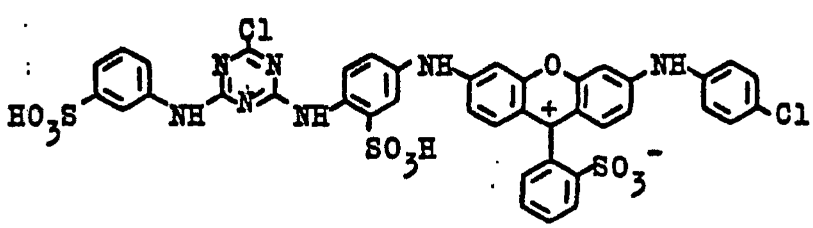

und eignet sich zum Bedrucken von Baumwolle in kräftigen, naßechten Violett-Tönen.

Die im obigen Beispiel, Absatz 1 eingesetzte Komponente 1 kann wie folgt hergestellt werden:

162 g 3,6-Dichlor-9-(2-sulfo-phenyl)-xanthyliumbetain werden mit 1200 ml Wasser verrührt und 85,6 g 2,5-Diamino-benzolsulfonsäure 90,3 %ig zugegeben. Das Reaktionsgemisch wird innerhalb von 2 Stunden auf 100°C erwärmt und 2 Stunden bei 100°C gerührt. In der Wärme salzt man mit 150 g Kochsalz aus, läßt die Suspension durch mehrstündiges Rühren auf Raumtemperatur abkühlen, saugt das Zwischenprodukt ab und wäscht es mit 1500 ml 5 %iger Kochsalzlösung. Nach Trocknen im Vakuum bei 50°C erhält man die Verbindungen der Formel

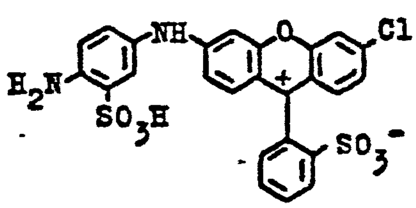

120 g des oben hergestellten Zwischenproduktes werden mit 250 ml Dimethylformamid und 150 g 4-Chloranilin 5 1/2 Stunden auf 100°C erwärmt. Man trägt das Reaktionsgemisch auf 3 500 ml Wasser und 1 500 ml 10 %ige Salzsäure aus, läßt einige Stunden bei Raumtemperatur rühren, saugt den Feststoff ab, wäscht ihn mit 4 l kaltem Wasser und 2 l heißem Wasser und trocknet. Die erhaltene Farbstoffkomponente entspricht der Formel

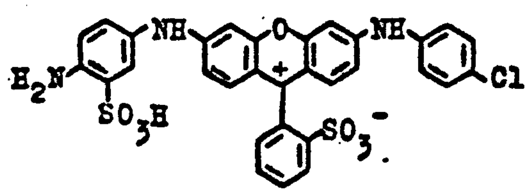

Ersetzt man im Beispiel 73 oder 101 die dort aufgeführten Komponenten 1-3 durch die Komponenten der Tabelle VI und verfährt in analoger Weise, so erhält man violette bis blaue Farbstoffe, die sich zum Färben und Bedrucken von Cellulosefasern eignen.

Tabelle VI

| Nr. | Komponente 1 | Komponente 2 | Komponente 3 |
|---|---|---|---|
| 102 | 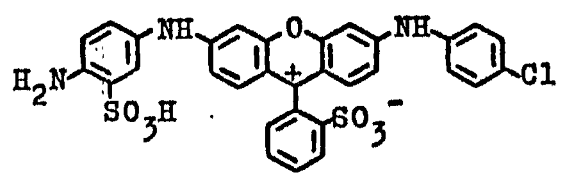 | 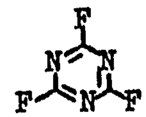 | 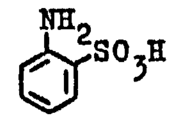 |
| 103 | " | " | 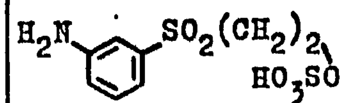 |
| 104 | 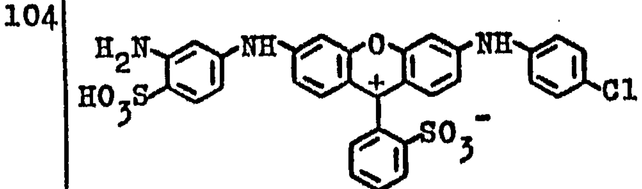 | 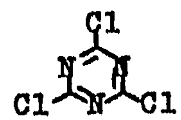 | 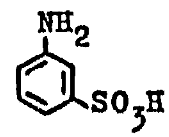 |
| 105 | 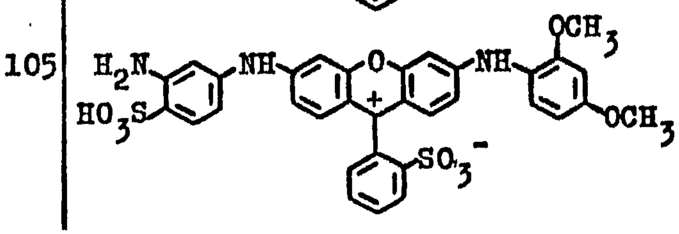 | " | " |

Tabelle VI, Fortsetzung

| Nr. | Komponente 1 | Komponente 2 | Komponente 3 |
|---|---|---|---|
| 106 | 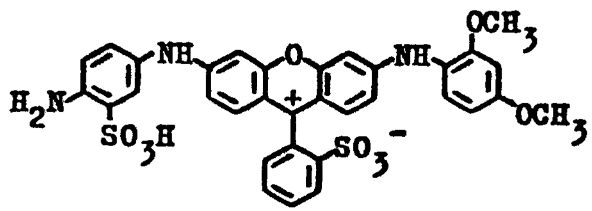 | 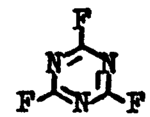 | 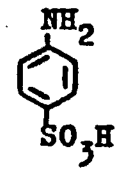 |
| 107 | 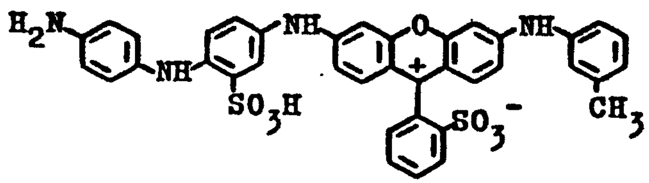 | " | 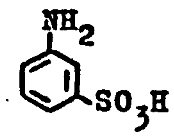 |
| 108 | 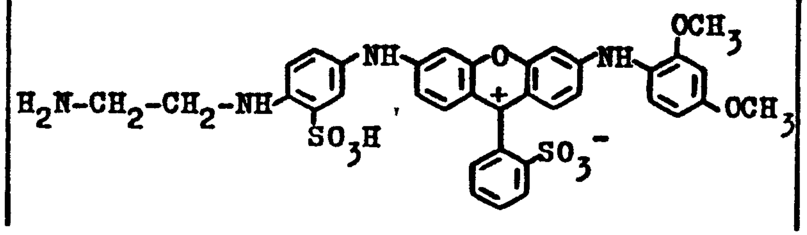 | 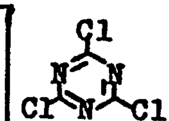 | " |

Patentansprüche

1. Farbstoffe der Formel

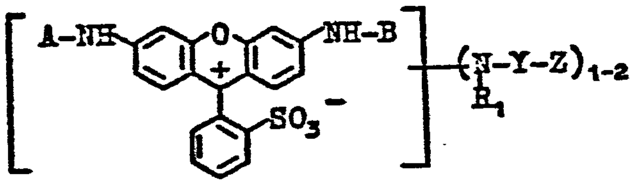

I

worin

A = ein- oder mehrkerniger aromatischer Ring,

B = sulfogruppenfreier ein- oder mehrkerniger aromatischer Ring,

$R_1$ = H, Alkyl,

Y = direkte Bindung oder Brückenglied

Z = ein heterocyclischer faseraktiver Rest

und wobei die Ringe A und B noch weitere in Farbstoffen übliche Substituenten tragen können.

2. Farbstoffe der Formel

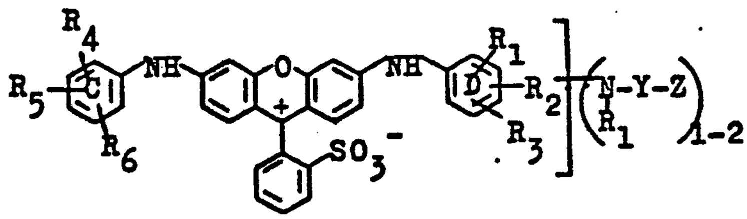

II.

worin

$R_1 - R_6$ = unabhängig voneinander H oder Substituent, wobei zwei benachbarte Reste $R_1$, $R_2$ oder $R_3$ bzw. $R_4$, $R_5$ oder $R_6$ einen ankondensierten iso- oder heterocyclischen Ring bilden können,

und wobei der Kern D frei von Sulfonsäuregruppen ist.

3. Farbstoffe der Formel

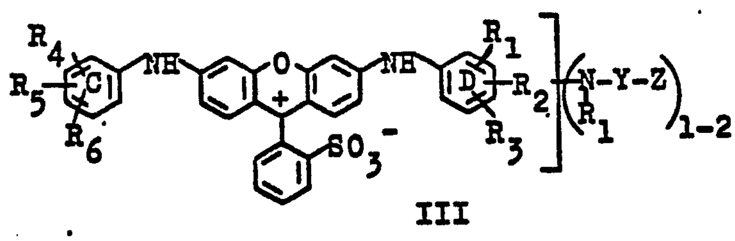

III

worin

$R_1 - R_3$ = H, Alkyl-($C_1$-$C_4$), Alkoxy, Aryloxy, Halogen, COOH, Carboxyalkoxy, Carbonamid, Cyan, gegebenenfalls substituiertes Amino, Acylamino, Hydroxy, Alkylsulfonyl, Arylsulfonyl, Nitro,

$R_4 - R_6$ = H, Alkyl-($C_1$-$C_4$), Alkoxy, Aryloxy, Halogen, COOH, Carboxyalkoxy, Carbonamid, Cyan, gegebenenfalls substituiertes Amino, Acylamino, Hydroxy, Alkylsulfonyl, Arylsulfonyl, Nitro, $SO_3H$.

4. Farbstoffe der Formel

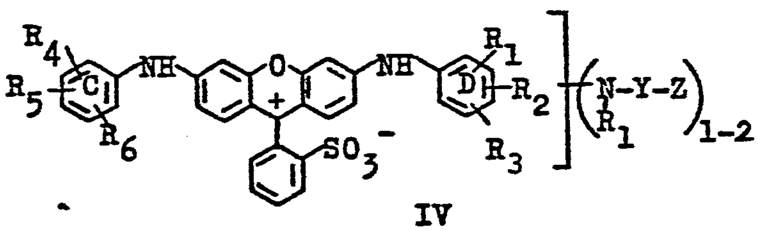

IV

worin

$R_1 - R_6$ = unabängig voneinander H oder Substituent, wobei zwei benachbarte Reste $R_1$, $R_2$ oder $R_3$ bzw. $R_4$, $R_5$ oder $R_6$ einen ankondensierten iso- oder heterocyclischen Ring bilden können;

Y = direkte Bindung, 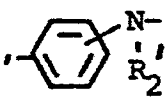 , $C_2$-$C_4$-Alkylen-N($R_2$)-, -Cycloalkylen-N($R_2$)-,

und wobei der Kern D frei von Sulfonsäuregruppen ist.

5. Farbstoffe der Formel

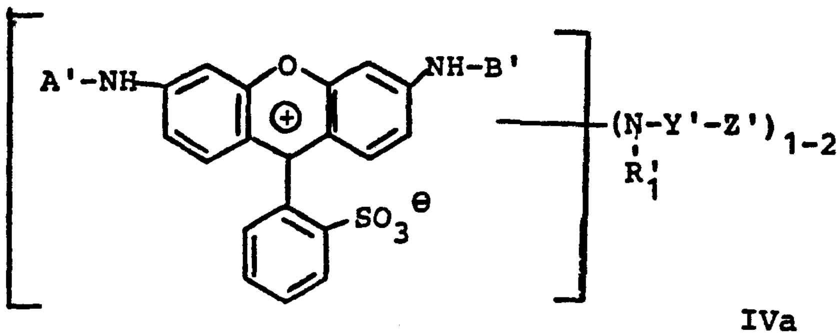

IVa

worin

A' = gegebenenfalls durch $SO_3H$, Alkoxy-($C_1$-$C_4$), $NO_2$, Alkyl-($C_1$-$C_4$), Phenoxy, Phenylamino substituierter Benzol- oder Naphthalinrest,

B' = gegebenenfalls durch Alkyl-($C_1$-$C_4$), Alkoxy-($C_1$-$C_4$), Halogen substituierter Benzolrest,

$R_1'$ = Wasserstoff,

Y' = direkte Bindung oder die Gruppe $-CH_2-CH_2-NH-$,

Z' = Reaktivrest der Reihe Fluorchlorpyrimidinyl, Monochlortriazinyl, Monofluortriazinyl, Dichlorchinoxalinyl oder Dichlortriazinyl,

und wobei die Gruppe $-(\underset{R_1}{N}-Y'-Z')$ an ein Kohlenstoffatom des Restes A' und/oder B' gebunden ist.

6. Verfahren zur Herstellung von Farbstoffen der allgemeinen Formel

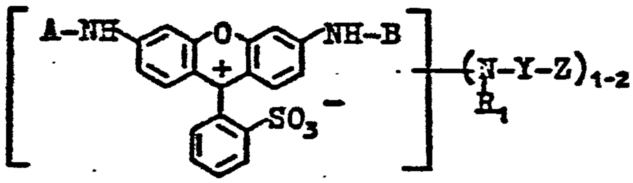

(I)

worin

A = ein- oder mehrkerniger aromatischer Ring,

B = sulfogruppenfreier ein- oder mehrkerniger aromatischer Ring,

$R_1$ = H, Alkyl,

Y = direkte Bindung oder Brückenglied,

Z = ein heterocyclischer faseraktiver Rest

und wobei die Ringe A und B noch weitere in Farbstoffen übliche Substituenten tragen können,

dadurch gekennzeichnet, daß man Verbindungen der Formel

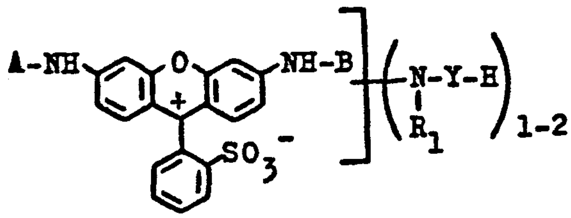 V.

mit Reaktivkomponenten der Formel

Z-Halogen VI

worin Z die oben angegebene Bedeutung besitzt und Halogen für Fluor, Chlor oder Brom steht,

umsetzt und gegebenenfalls anschließend sulfoniert.

7. Verbindungen der Formel

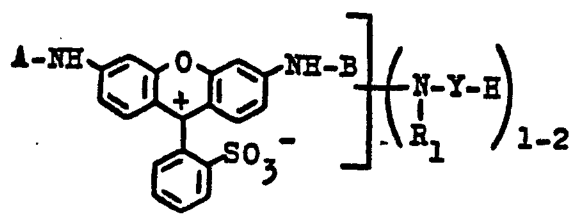 V

worin

A = ein- oder mehrkerniger aromatischer Ring,

B = sulfogruppenfreier ein- oder mehrkerniger aromatischer Ring,

$R_1$ = H oder Alkyl,

Y = direkte Bindung oder Brückenglied,

und wobei

die Ringe A und B noch weitere in Farbstoffen übliche Substituenten tragen können.

8. Verbindungen der Ansprüche 2 - 5 mit Z bzw. Z' = H.

9. Verwendung von Farbstoffen gemäß Anspruch 1 bis 5 zum Färben oder Bedrucken von hydroxylgruppen- und/oder stickstoffhaltigen Textilmaterialien.

10. Mit Farbstoffen gemäß Anspruch 1 bis 5 gefärbtes oder bedrucktes hydroxylgruppen- oder stickstoffhaltiges Textilmaterial.